# EUROPÄISCHE PATENTSCHRIFT

(11) **EP 2 041 729 B1**
(45) Veröffentlichungstag und Bekanntmachung des Hinweises auf die Patenterteilung: **01.09.2010**
(21) Anmeldenummer: 07730025.9
(22) Anmeldetag: 08.06.2007
(51) Int. Cl.: G07C 9/00

(54) **LESEGERÄT FÜR EIN DOKUMENT, VERFAHREN ZUM LESEN EINES DATENOBJEKTS UND COMPUTERPROGRAMMPRODUKT**
READER FOR A DOCUMENT, METHOD FOR READING A DATA OBJECT AND COMPUTER PROGRAM PRODUCT
APPAREIL DE LECTURE POUR UN DOCUMENT, PROCÉDÉ POUR LA LECTURE D'UN OBJET DE DONNÉES ET PRODUIT DE PROGRAMME INFORMATIQUE

(30) Priorität: 09.06.2006 DE 102006027253
(43) Veröffentlichungstag der Anmeldung: 01.04.2009
(73) Patentinhaber: Bundesdruckerei GmbH, 10958 Berlin (DE)
(72) Erfinder: NGUYEN, Kim, 10437 Berlin (DE); FREYTAG, Claus, 10587 Berlin (DE); FRÖHLICH, Martin, 13088 Berlin (DE); OSTERODE, Gunnar, 10711 Berlin (DE); CHRYSELIUS, Toralf, 16562 Bergfelde (DE); HILL, Jan, 10179 Berlin (DE)
(74) Vertreter: Richardt, Markus Albert
(86) Internationale Anmeldenummer: PCT/EP2007/055671
(87) Internationale Veröffentlichungsnummer: WO 2007/141338

(56) Entgegenhaltungen:
- EP-A- 1 686 541
- WO-A-98/52136
- DE-A1-102004 056 007
- US-A1- 2002 095 587
- BUNDESAMT FÜR SICHERHEIT IN DER INFORMATIONSTECHNIK: "Risiken und Chancen des Einsatzes von RFID-Systemen"[Online] Oktober 2004 (2004-10), Seiten 1-128, XP002461316 Print Medium and Online ISBN: 3-922746-56-X Gefunden im Internet: URL:http://www.bsi.de/fachthem/rfid/RIKCHA .pdf> [gefunden am 2007-12-05]

## Beschreibung

Die Erfindung betrifft ein Lesegerät für ein Dokument, insbesondere ein Wert- oder Sicherheitsdokument, sowie ein Verfahren zum Lesen eines Datenobjekts aus einem Datenspeicher eines solchen Dokuments und ein Computerprogrammprodukt. Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkarte, insbesondere als sogenannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für

Electronic Ticketing, oder werden in Papier, wie zum Beispiel in Wert- und Sicherheitsdokumenten, insbesondere Banknoten und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren für kontaktlose Karten sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet. Schutzmechanismen zum Schutz gegen unbefugtes Auslesen der Daten aus einem solchen Dokument werden auch als "Basic Access Control" bezeichnet, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO) (http://www.icao.int/mrtd/download/documents/TR-PKI%20mrtds%20ICC%20read-only%20access%20v1 1.pdf)

Aus dem Stand der Technik sind ferner Verfahren bekannt, Daten unter kryptographischem Schutz elektronisch zu speichern. Eine in den vergangenen zwei Jahrzehnten zu großer Verbreitung gelangte Form geschützter Speicher sind elektronische Chipkarten, die durch ISO 7816 Teil 1 bis 4 genormt sind. Zu den Anwendungsgebieten der Chipkartentechnologie gehört die Einführung maschinenlesbarer Reisedokumente, von der eine Erhöhung der Sicherheit wie auch der Effizienz der Passagierkontrollen insbesondere in der weltweiten Luftfahrt erhofft wird.

Bei der sicheren Speicherung personenbezogener Daten in maschinenlesbaren Reisedokumenten stehen sich das Ziel der Erleichterung von Sicherheitskontrollen durch eine möglichst große Zahl staatlicher und nichtstaatlicher Organisationen und die Schutzwürdigkeit personenbezogener Daten vor unberechtigtem Auslesen gegenüber. Eine angemessene Balance zwischen beiden Anforderungen hat sowohl Unterschieden datenschutzrechtlicher Art als auch unterschiedlicher Schutzwürdigkeit einzelner Datenobjekte Rechnung zu tragen.

Aus der US 2005/0097320A1 ist ein System bekannt, welche eine Kommunikation zwischen einem Anwender und einer Institution, beispielsweise einer Bank, ermöglicht. Die Kommunikation, erfolgt über ein Netzwerk. Bei jedem Zugriff des Anwenders auf das System der Institution erfolgt ein "transaction risk assessment", bei dem das Risiko der aktuellen Transaktion ermittelt wird.

Aus der US 2002/0087894 A1 ist ein ähnliches System bekannt, bei dem der Anwender selbst die Sicherheitsstufe für den Datentransfer wählt.

Aus DE 10 2004 056 007 A1 ist eine mobile Verifikationseinrichtung zur Echtheitsüberprüfung von Reisedokumenten bekannt. Über ein Kommunikationsmodul kann drahtlos mit einem Datennetz kommuniziert werden, um die aus dem RFID-Element ausgelesenen Daten zu verifizieren.

Aus WO 98/ 52136 ist eine IDENTITY Card bekannt, auf der Informationen gespeichert sind. Der Zugriff auf diese Information setzt die Inhaberschaft einer ACCESS Smart Card voraus, auf der Autorisierungscodes gespeichert sind.

Aus Bundesamt für Sicherheit in der Informationstechnik "Risiken und Chancen des Einsatzes von RFID-Systemen", Oktober 2004, Seiten 1 bis 128, insbesondere Abschnitt 7.7.1.2, ist es bekannt, dass sich ein Lesegerät gegenüber einem tag authentifizieren muss. Diesbezüglich werden verschiedene Authentifizierungsverfahren offenbart.

Aus US 2002 / 009 5587 ist eine Smart Card mit integriertem biometrischen Sensor bekannt. Mit Hilfe des biometrischen Sensors erfolgt eine Authentifizierung gegenüber der Smart Card.

Der Erfindung liegt dem gegenüber die Aufgabe zu Grunde, ein weiteres Lesegerät für ein Dokument mit einem Datenspeicher zu schaffen, sowie ein Verfahren zum Lesen eines Datenobjekts aus einem Datenspeicher eines Dokuments und ein entsprechendes Computerprogrammprodukt.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Lesegerät für ein Dokument geschaffen, wobei das Dokument einen Datenspeicher zur Speicherung zumindest eines Datenobjekts aufweist. Ein externer Lesezugriff auf dieses Datenobjekt setzt die Durchführung eines kryptographischen Protokolls voraus, um beispielsweise das Datenobjekt vor unautorisierten Zugriffen zu schützen.

Das erfindungsgemäße Lesegerät hat eine erste Schnittstelle für den externen Lesezugriff auf das Datenobjekt sowie Mittel zur Durchführung des kryptographischen Protokolls. Das Lesegerät hat eine zweite Schnittstelle zur Anforderung der Durchführung eines kryptographischen Algorithmus von einer kryptographischen Komponente und zum Empfang eines Ergebnisses der Durchführung des kryptographischen Algorithmus. Die Mittel zur Durchführung des kryptographischen Protokolls sind zur Generierung der Anforderung und zur Verwendung des Ergebnisses für die Durchführung des kryptographischen Protokolls ausgebildet. Unter "externem Lesezugriff' wird erfindungsgemäß die Übertragung des Datenobjekts von dem Dokument an das Lesegerät verstanden.

Im Prinzip können erfindungsgemäß beliebige kryptographische Protokolle zum Einsatz kommen. Vorzugsweise wird ein kryptographisches Protokoll einer Sicherheitsstufe gewählt, welches dem Grad der Vertraulichkeit oder Schutzbedürftigkeit des in dem Dokument gespeicherten Datenobjekts entspricht. Beispielsweise können die folgenden kryptographischen Protokolle zum Einsatz kommen: Challenge-Response, Diffie-Hellmann auf Basis elliptischer Kurven (EC-DH) oder auf Basis endlicher Körper (klassischer DH), Fiat-Shamir, Zero-Knowledge Verfahren, Blind-Signatures.

Solche kryptographische Protokolle laufen unter Verwendung von einem oder mehreren kryptographischen Algorithmen oder Mechanismen ab. Erfindungsgemäß können im Prinzip beliebige kryptographische Algorithmen zum Einsatz kommen, wobei auch hier vorzugsweise die Auswahl des kryptographischen Algorithmus in Abhängigkeit von der Schutzbedürftigkeit des Datenobjekts erfolgt. Als kryptographische Algorithmen können beispielsweise eingesetzt werden: Symmetrische kryptographische Algorithmen, wie zum Beispiel Data Encryption Standard (DES) oder International Data Encryption Algorithm (IDEA), oder asymmetrische kryptographische Algorithmen, wie zum Beispiel Algorithmus nach Rives, Shamir und Adlemann (RSA), der elliptische Kurven Digitale Signatur Algorithms (ECDSA) oder Digital Signature Algorithm (DSA).

Diese kryptographischen Algorithmen basieren auf kryptographischen Schlüsselmaterial, welches geheim gehalten werden muss, um die Vertrauenswürdigkeit einer entsprechenden kryptographischen Überprüfung zu gewährleisten. Beispielsweise ist bei einem symmetrischen kryptographischen Algorithmus der Schlüssel (bei mehrstufigen Verfahren eventuell auch mehrere Schlüssel) geheim zu halten, während bei einem asymmetrischen kryptographischen Algorithmus, der auf einem Schlüsselpaar basiert, der private Schlüssel ("Private Key") des Schlüsselpaars geheim gehalten werden muss.

Erfindungsgemäß erfolgt die Durchführung des kryptographischen Algorithmus nicht durch das Lesegerät selbst, sondern durch eine kryptographische Komponente, mit der das Lesegerät über die zweite Schnittstelle kommunizieren kann. Das Lesegerät selbst führt also zusammen mit dem Dokument das kryptographische Protokoll aus, wohingegen der kryptographische Algorithmus, der die Verwendung eines dem Lesegerät oder dessen autorisierten Benutzer zugeordneten geheimen Schlüssels erfordert, durch die kryptographische Komponente ausgeführt wird.

Dies hat insbesondere den Vorteil, dass der geheime Schlüssel nicht in dem Lesegerät gespeichert werden muss, da dieser nicht von dem Lesegerät selbst, sondern nur von der kryptographischen Komponente für die Durchführung des kryptographischen Algorithmus benötigt wird. Dadurch wird die Vertrauenswürdigkeit der kryptographischen Überprüfung erhöht, da nicht in einer Vielzahl von Lesegeräten geheimes kryptographisches Schlüsselmaterial gespeichert werden muss.

Im Gegenteil ist dieses nur in den kryptographischen Komponenten vorhanden, wo der oder die geheimen Schlüssel vor unbefugtem Zugriff besonders gesichert werden können. Hierdurch ist gewährleistet, dass beispielsweise auch bei einem Diebstahl von Lesegeräten die Vertrauenswürdigkeit des verwendeten kryptographischen Protokolls nicht beeinträchtigt wird. Dies ist von besonderem Vorteil bei einem massenhaften Einsatz solcher Lesegeräte, beispielsweise für die Zwecke von Grenzkontrollen oder dergleichen.

Nach einer Ausführungsform der Erfindung ist das Lesegerät zum Lesen des zumindest einen Datenobjekts aus einem Wert- oder Sicherheitsdokument, insbesondere einem Zahlungsmittel, einem Ausweisdokument, wie zum Beispiel einem Reisepass, Personalausweis, Visum, Führerschein oder dergleichen ausgebildet.

Bei dem Dokument kann es sich um ein papierbasiertes Dokument, wie zum Beispiel einen elektronischen Reisepass, oder eine Chipkarte, insbesondere eine sogenannte Smart Card, handeln.

Nach einer Ausführungsform der Erfindung ist die erste Schnittstelle des Lesegeräts für den externen Lesezugriff auf das Datenobjekt kontaktbehaftet oder drahtlos ausgebildet. Ferner kann diese Schnittstelle sowohl eine kontaktbehaftete als auch eine drahtlose Kommunikation ermöglichen, das heißt, es kann sich um eine sogenannte Dual-Interface Schnittstelle handeln. Insbesondere kann es sich hierbei auch um eine RFID-Schnittstelle handeln.

Nach einer Ausführungsform der Erfindung hat das Lesegerät ein kryptographisches Anwendungsprogramm zur Durchführung von zumindest einem kryptographischen Protokoll. Beispielsweise kann das Anwendungsprogramm über die zweite Schnittstelle des Lesegeräts auf die kryptographische Komponente zugreifen, um nach erfolgreicher Durchführung des kryptographischen Protokolls über die erste Schnittstelle des Lesegeräts den externen Lesezugriff auf das Datenobjekt des Dokuments durchzuführen und/oder von dort zu empfangen. Je nach dem Anwendungsgebiet kann anschließend die Ausgabe, Anzeige und / oder Weiterverarbeitung des Datenobjekts durch das Anwendungsprogramm erfolgen oder initiiert werden.

Die zweite Schnittstelle des Lesegeräts zu der kryptographischen Komponente kann als kontaktbehaftete, drahtlose oder Dual-Interface Chipkarten-Schnittstelle ausgebildet sein. In diesem Fall handelt es sich bei der kryptographischen Komponente um eine Chipkarte mit einem geschützten Speicherbereich, in dem zumindest ein geheimer Schlüssel gespeichert ist, sowie einem Mikroprozessor zur Durchführung des kryptographischen Algorithmus. Über die Chipkarten-Schnittstelle und ein daran angeschlossenes Chipkarten-Lesegerät kann das Lesegerät auf die kryptographische Komponente zugreifen, um die Durchführung des kryptographischen Algorithmus anzufordern und das entsprechende Ergebnis von der kryptographischen Komponente zu empfangen. Das Chipkarten-Lesegerät kann einen integralen Bestandteil des erfindungsgemäßen Lesegeräts bilden oder als externes Gerät an das Lesegerät anschließbar sein.

Nach einer Ausführungsform der Erfindung erfolgt der Datenaustausch zwischen dem Lesegerät und der kryptographischen Komponente über Application Protocol Data Units (APDUs). In diesem Fall kann das Lesegerät eine Anforderung zur Durchführung des kryptographischen Algorithmus in Form einer sogenannten Kommando-APDU ("Command-APDU") an die kryptographische Komponente richten. Die kryptographische Komponente antwortet darauf mit einer Antwort APDU ("Response-APDU"), die das Ergebnis der Durchführung des kryptographischen Algorithmus beinhaltet.

Nach einer Ausführungsform der Erfindung ist die zweite Schnittstelle des Lesegeräts als Netzwerk-Schnittstelle ausgebildet. In diesem Fall kann das Lesegerät über ein Netzwerk auf eine kryptographische Komponente zugreifen. Bei der kryptographischen Komponente kann es sich in diesem Fall um einen externen Server-Computer handeln, der sich beispielsweise in einer besonders geschützten Umgebung, insbesondere einem sogenannten Trust-Center, befindet. Vorzugsweise ist der Zugriff auf die kryptographische Komponente über das Netzwerk geschützt. Beispielsweise kann das Netzwerk als sogenanntes Virtual Private Network (VPN) ausgebildet sein. Alternativ oder zusätzlich kann es erforderlich sein, dass das Lesegerät oder dessen Benutzer sich gegenüber der kryptographischen Komponente über das Netzwerk authentifiziert.

Nach einer weiteren Ausführungsform der Erfindung ermöglicht das Lesegerät wahlweise die Nutzung einer Chipkarte oder eines Server-Computers als kryptografische Komponente. Beispielsweise hat das Lesegerät also zweite Schnittstellen für die Kommunikation mit einer Chipkarte und für die Kommunikation über ein Netzwerk.

Nach einer Ausführungsform der Erfindung ist das Lesegerät tragbar ausgebildet. Dies ermöglicht einen mobilen Einsatz des Lesegeräts. Bei dieser Ausführungsform ist besonders vorteilhaft, wenn die zweite Schnittstelle des Lesegeräts zur Kommunikation mit einer Chipkarte als kryptographischer Komponente ausgebildet ist, da das Lesegerät auch dann verwendet werden kann, wenn keine Netzwerk-Verbindung besteht.

Nach einer Ausführungsform der Erfindung beinhaltet das Dokument optisch lesbare Daten, die zum Beispiel auf dem Dokument aufgedruckt sind. Bei den optisch lesbaren Daten kann es sich zum Beispiel um die sogenannte ICAO-Zeile handeln. Das Lesegerät kann einen optischen Sensor aufweisen, der zum Erfassen dieser optisch lesbaren Daten dient.

In einer Ausführungsform der Erfindung werden die von dem Lesegerät optisch erfassten Daten für die Durchführung des kryptographischen Protokolls verwendet. Beispielsweise können die optisch erfassten Daten für die Durchführung eines Datenbankzugriffs dienen, um für das betreffende Dokument zu ermitteln, welche Datenobjekte in dem Dokument gespeichert sind und welches die den Datenobjekten zugeordneten kryptographischen Protokolle sind. Dadurch, dass die Daten des Dokuments zunächst optisch gelesen werden müssen, ist ferner eine Basic Access Control gewährleistet.

Nach einer Ausführungsform der Erfindung ist das Lesegerät zur Durchführung von zumindest zwei verschiedenen kryptographischen Protokollen ausgebildet. Dies ermöglicht es, verschiedene Datenobjekte aus dem Dokument auszulesen, denen jeweils solche verschiedenen kryptographischen Protokolle zugeordnet sind. Beispielsweise handelt es sich bei einem der Datenobjekte um ein Gesichtsbild, während es sich bei einem weiteren Datenobjekt um die Fingerabdruckdaten eines Trägers eines elektronischen Reisepasses handelt. Da diese Datenobjekte einen unterschiedlichen Grad der Schutzbedürftigkeit aufweisen, sind den Datenobjekten dementsprechend verschiedene kryptographische Protokolle unterschiedlicher Sicherheitsstufen zugeordnet. Ein externer Lesezugriff auf eines dieser Datenobjekte durch das Lesegerät setzt also voraus, dass das dem betreffenden Datenobjekt zugeordnete kryptographische Protokoll zunächst erfolgreich durchgeführt worden ist.

Nach einer Ausführungsform der Erfindung ist in dem Dokument eine Zuordnungstabelle gespeichert, in der unterschiedlichen Datenobjekten ein kryptographisches Protokoll unterschiedlicher Sicherheitsstufe zugeordnet ist. Das Lesegerät übermittelt dem Dokument hierbei zunächst eine Anforderung für eines der Datenobjekte. Das Dokument bestimmt mit Hilfe der Zuordnungstabelle ein kryptographisches Protokoll für das eine der Datenobjekte. Das Dokument und das Lesegerät führen das kryptographische Protokoll durch. Unter der Voraussetzung einer erfolgreichen Durchführung des kryptographische Protokolls übermittelt das Dokument das eine der Datenobjekte an das Lesegerät.

Die vorliegende Erfindung ist besonders vorteilhaft, da sie es ermöglicht, als unterschiedlich schutzwürdig eingestufte Datenobjekte, die gemeinsam in einem als Datenträger dienenden Dokument abgespeichert sind, unterschiedlich stark zu schützen und auf diese Weise miteinander in Konflikt stehenden Anforderungen an die Zugänglichkeit und die Schutzbedürftigkeit der gespeicherten Datenobjekte flexibel zu entsprechen.

Nach einer Ausführungsform der Erfindung weist das Dokument eine Softwareanwendung auf, die die Zuordnungstabelle beinhaltet. Die Softwareanwendung bestimmt mit Hilfe der Zuordnungstabelle das kryptographische Protokoll, führt das bestimmte kryptographische Protokoll zusammen mit dem Lesegerät durch und sendet unter Voraussetzung der erfolgreichen Durchführung das eine der Datenobjekte an das Lesegerät. Mithin sind alle Verfahrensschritte auf Seiten des Dokumentes durch die Softwareanwendung implementiert, was den Vorteil hat, dass das Dokument mit standardisierter, kostengünstig produzierter Hardware aufgebaut werden und die Stärke des kryptographischen Schutzes der Datenobjekte individuellen Anforderungen leicht angepasst werden kann.

Nach einer Ausführungsform der Erfindung weist das Dokument ein Betriebssystem auf, das eine unberechtigte Veränderung oder Entfernung der Softwareanwendung verhindert und den Zugriff auf die Datenobjekte nur über die Softwareanwendung zulässt. Durch diese Funktion des Betriebssystems wird gewährleistet, dass der durch die Softwareanwendung implementierte Schutz der Datenobjekte nicht von unberechtigter Seite umgangen oder gebrochen werden kann. Bevorzugterweise lässt das Betriebssystem nach einer Authentisierung als Administrator des Dokuments jedoch eine Veränderung oder Entfernung der Softwareanwendung zu. Dies ist besonders vorteilhaft, weil zum Beispiel die Zuordnung einzelner Datenobjekte zu kryptographischen Protokollen oder die kryptographischen Protokolle selbst verändert werden können, ohne das Dokument ersetzen zu müssen. In bevorzugter, jedoch nicht einschränkender Weise betrifft die Erfindung eine das Verfahren implementierende Softwareanwendung für eine Chipkarte, insbesondere ein Java-Applet für eine Chipkarte mit einem Betriebssystem, das eine Virtuelle Java-Maschine einschließt.

Nach einer Ausführungsform der Erfindung handelt es sich bei dem Dokument um ein Ausweisdokument. Ausweisdokumente können beispielsweise Chipkarten im Scheckkartenformat sein, oder aber Dokumente anderer Formate wie Reisepässe oder Visa. Insbesondere kann es sich bei dem Ausweisdokument um ein maschinenlesbares Reisedokument gemäß den ePassport-Standardisierungen der Internationalen Luftfahrtbehörde ICAO handeln. Die ICAO definiert für maschinenlesbare Reisedokumente unter der Bezeichnung Logische Datenstruktur (LDS) ein mit dem Chipkartenstandard ISO 7816-4 konformes Dateisystem sowie eine interoperable Struktur der in dem Dateisystem gespeicherten Daten.

Nach einer Ausführungsform der Erfindung umfasst mindestens eines der Datenobjekte personenbezogene biometrische Daten. Für den Fall eines maschinenlesbaren Reisedokumentes gemäß den ePassport-Standardisierungen sind durch die LDS die Pfadnamen und Dateiformate personenbezogener, darunter auch biometrischer Daten festgelegt. Insbesondere ist die Speicherung eines Lichtbilds, von Fingerabdrücken sowie Irisdaten des Inhabers des Ausweisdokuments standardisiert. Die Verwendung dieses Standards ist besonders vorteilhaft, weil erfindungsgemäß damit beispielsweise dem Lichtbild eine andere, beispielsweise geringere, Schutzwürdigkeit und damit ein kryptographisches Protokoll geringerer Sicherheitsstufe zugeordnet werden kann als den Fingerabdrücken oder den Irisdaten.

In Abhängigkeit von der Ausführungsform der Erfindung kann das Repertoire der dem Dokument und der Lesegerät zur Verfügung stehenden kryptographischen Protokolle unterschiedliche Protokolle umfassen und die Zuordnung der einzelnen in dem Dokument gespeicherten Datenobjekte zu den einzelnen zur Verfügung stehenden kryptographischen Protokollen unterschiedlich festgelegt sein. Erfindungsgemäß kann hierbei der lesende Zugriff frei möglich sein, an die Durchführung eines kryptographischen Protokolls gebunden sein, an die Durchführung eines von mehreren zur Auswahl gestellten kryptographischen Protokollen gebunden sein oder auch an die verpflichtende Durchführung mehrerer kryptographischer Protokolle gebunden sein. Bevorzugterweise ist in der Zuordnungstabelle mindestens einem der Mehrzahl von Datenobjekten ein freier Zugriff ohne verpflichtendes kryptographisches Protokoll zugeordnet.

Nach einer Ausführungsform der Erfindung ist mindestens einem Datenobjekt ein kryptographisches Protokoll gehobener Sicherheitsstufe zugeordnet, das eine Authentisierung des Lesegerät gegenüber dem Dokument mittels eines Challenge-Response-Verfahrens erfordert, das auf einem symmetrischen kryptographischen Algorithmus beruht. Hierbei kann ein gerätspezifischer Schlüssel zum Einsatz kommen, den das Lesegerät z.B. aus mit dem Dokument verbundenen maschinenlesbaren gedruckten Daten ableiten muss. Zur Ableitung des gerätspezifischen Schlüssels kann zusätzlich ein Generalschlüssel erforderlich sein.

Nach einer Ausführungsform der Erfindung ist mindestens einem Datenobjekt ein kryptographisches Protokoll höherer Sicherheitsstufe zugeordnet, das eine Authentisierung des Lesegeräts gegenüber dem Dokument mittels eines Challenge-Response-Verfahrens erfordert, das auf einem asymmetrischen kryptographischen Algorithmus beruht. Hierbei verfügt das Lesegerät über einen öffentlichen Schlüssel und einen privaten Schlüssel. Das Lesegerät sendet dem Dokument seinen öffentlichen Schlüssel, dessen Authentizität bevorzugterweise über eine digitalen Signatur geschützt ist, die durch das Dokument über eine Zertifikatskette verifiziert werden kann. Nachfolgend beweist die Lesegerät dem Dokument in einer Challenge-Response-Sequenz, dass es auch über den zugehörigen privaten Schlüssels verfügt, der in der kryptographischen Komponente gespeichert ist, auf die das Lesegerät über dessen zweite Schnittstelle zugreifen kann. Bevorzugterweise ist die Durchführung des kryptographischen Protokolls höherer Sicherheitsstufe zusätzlich zu dem Protokoll gehobener Sicherheitsstufe erforderlich.

Nach einer Ausführungsform der Erfindung findet die Kommunikation zwischen dem Lesegerät und dem Dokument kontaktlos statt, bevorzugterweise über eine kontaktlose Schnittstelle entsprechend den Normen ISO/IEC 14443 Teil 1 bis 4, wie sie für den Fall von maschinenlesbaren Reisedokumenten durch die ICAO gefordert wird. Um eine nicht autorisierte Beobachtung der kontaktlosen Kommunikation von dritter Seite zu verhindern, ist hierbei bevorzugterweise in der Zuordnungstabelle unterschiedlichen Datenobjekten weiterhin ein Verschlüsselungsprotokoll unterschiedlicher Sicherheitsstufe zugeordnet, gemäß dem das Lesegerät und das Dokument verschlüsselt kommunizieren. Hierbei tauschen Lesegerät und Dokument bevorzugterweise auf sichere Weise einen oder mehrere Sitzungsschlüssel aus oder führen eine beidseitige Authentisierung durch, als deren Resultat einer oder mehrere Sitzungsschlüssel zur Verfügung stehen.

In einem weiteren Aspekt betrifft die Erfindung ein Verfahren zum Lesen eines Datenobjekts aus einem Datenspeicher eines Dokuments mit folgenden Schritten: Durchführung eines dem Datenobjekt zugeordneten kryptographischen Protokolls zur Freigabe eines externen Lesezugriffs durch das Dokument, Auslesen des Datenobjekts aus dem Datenspeicher nach der Freigabe des Zugriffs, wobei für die Durchführung des kryptographischen Protokolls eine Anforderung für die Ausführung eines kryptographischen Algorithmus von einem Lesegerät generiert und an eine kryptographische Komponente gesendet wird, und wobei das Lesegerät ein Ergebnis der Durchführung des kryptographischen Algorithmus von der kryptographischen Komponente empfängt und für die Durchführung des kryptographischen Protokolls verwendet.

In einem weiteren Aspekt betrifft die Erfindung ferner ein Computerprogrammprodukt zur Durchführung eines solchen Verfahrens.

Im weiteren werden bevorzugte Ausführungsformen der Erfindung mit Bezugnahme auf die Zeichnungen näher erläutert. Es zeigen:
- Figur 1: ein Blockdiagramm einer Ausführungsform eines erfindungsgemä- ßen Lesegeräts mit einer Chipkarten-Schnittstelle,
- Figur 2: ein Blockdiagramm einer Ausführungsform eines erfindungsgemä- ßen Lesegeräts mit einer Netzwerk-Schnittstelle,
- Figur 3: ein Flussdiagramm einer Ausführungsform eines erfindungsgemä- ßen Verfahrens,
- Figur 4: ein Blockdiagramm einer Ausführungsform eines erfindungsgemä- ßen Lesegeräts, welches zur Durchführung von verschiedenen kryptographischen Protokollen ausgebildet ist,
- Figur 5: ein Flussdiagramm einer weiteren Ausführungsform eines erfin- dungsgemäßen Verfahrens,
- Figur 6: ein Blockdiagramm einer weiteren Ausführungsform eines erfin- dungsgemäßen Lesegeräts und eines Dokuments mit einer Zuord- nungstabelle,
- Figur 7: ein Flussdiagramm einer weiteren Ausführungsform eines erfin- dungsgemäßen Verfahrens,
- Figur 8: ein Flussdiagramm einer Ausführungsform eines erfindungsgemä- ßen Verfahrens mit den von dem Dokument implementierten Ver- fahrensschritten,
- Figur 9: ein Flussdiagramm einer Ausführungsform eines erfindungsgemä- ßen Verfahrens mit den von dem Lesegerät implementierten Ver- fahrensschritten.

In den nachfolgenden Figurenbeschreibungen werden einander entsprechende Elemente mit gleichen Bezugszeichen gekennzeichnet.

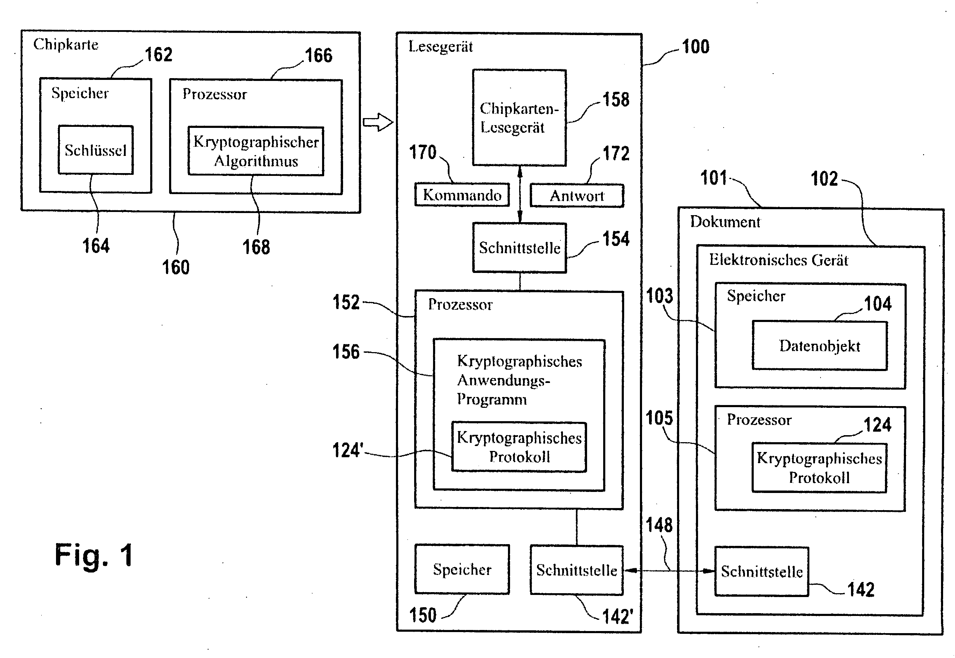

Die Figur 1 zeigt ein Lesegerät 100 für ein Dokument 101. Bei dem Dokument 101 handelt es sich beispielsweise um einen elektronischen Reisepass.

Ein elektronisches Gerät 102 ist in das Dokument 101 integriert. Bei dem elektronischen Gerät 102 kann es sich um einen integrierten elektronischen Schaltkreis handeln. Das elektronische Gerät 102 hat einen elektronischen Speicher 103 für zumindest ein Datenobjekt 104. Das Datenobjekt 104 beinhaltet schutzbedürftige Daten, beispielsweise personenbezogene und/oder biometrische Daten eines Trägers des Dokuments 101. Beispielsweise beinhaltet das Datenobjekt 104 ein Gesichtsbild, Fingerabdruckdaten und/oder Irisscan-Daten des Trägers des Dokuments 101.

Das elektronische Gerät 102 hat ferner einen Prozessor 105 zur Ausführung von Programminstruktionen 124, die die von dem elektronischen Gerät 102 auszuführenden Schritte eines kryptographischen Protokolls implementieren.

Das elektronische Gerät 102 hat eine Schnittstelle 142 zum Aufbau einer Kommunikationsverbindung 148 mit der entsprechenden Schnittstelle 142' des Lesegeräts 100.

Die Schnittstellen 142, 142' können kontaktbehaftet, drahtlos oder als Dual-Interface ausgebildet sein. Beispielsweise können durch die Schnittstellen 142, 142' ein RFID-System gebildet werden.

Das Datenobjekt 104 ist in dem Speicher 103 geschützt gespeichert. Ein externer Lesezugriff auf das Datenobjekt 104 über die Schnittstellen 142 kann nur nach erfolgreicher Durchführung des kryptographischen Protokolls erfolgen.

Das Lesegerät 100 hat einen Speicher 150 zur Speicherung des Datenobjekts 104, nachdem dieses von der Schnittstelle 142' über die Kommunikationsverbindung 148 empfangen worden ist.

Ein Prozessor 152 des Lesegeräts 100 ist mit der Schnittstelle 142' sowie einer weiteren Schnittstelle 154 des Lesegeräts 100 verbunden. Der Prozessor 152 dient zur Ausführung eines kryptographischen Anwendungsprogramms 156, welches Programminstruktionen 124' beinhaltet, die zur Ausführung der von dem Lesegerät 100 auszuführenden Schritte des kryptographischen Protokolls dienen.

Bei dem kryptographischen Anwendungsprogramm 156 kann es sich beispielsweise um ein Anwendungsprogramm für die Durchführung einer Zugangskontrolle, insbesondere einer Passkontrolle oder dergleichen handeln.

In dem hier betrachteten Ausführungsbeispiel ist die Schnittstelle 154 als Chipkarten-Schnittstelle ausgebildet. Das Lesegerät 100 beinhaltet ein Chipkarten-Lesegerät 158, in das eine Chipkarte 160 eingeführt werden kann. Über die Schnittstelle 154 und das Chipkarten-Lesegerät 158 kann das kryptographische Anwendungsprogramm 156 mit der Chipkarte 160 kommunizieren. Dies erfolgt beispielsweise über sogenannte APDUs oder mit einem anderen Request-Response Protokoll.

Die Chipkarte 160 hat einen Speicher 162, in dem zumindest ein symmetrischer oder asymmetrischer geheimer Schlüssel 164 gespeichert ist. Der Schlüssel 164 ist in einem geschützten Speicherbereich abgelegt, so dass ein Auslesen des Schlüssels 164 aus der Chipkarte 160 nicht möglich ist.

Die Chipkarte 160 hat einen Prozessor 166 zur Ausführung von Programminstruktionen 168, die einen kryptographischen Algorithmus implementieren, wie zum Beispiel einen Algorithmus für eine symmetrische oder asymmetrische Verschlüsselung mit Hilfe des in dem Speicher 162 gespeicherten Schlüssels 164, auf den der Prozessor 166 chipkartenintern zugreifen kann.

Für die Kontrolle des Dokuments 101, beispielsweise für eine Passkontrolle, muss das Datenobjekt 104 von dem Lesegerät 100 ausgelesen werden. Hierzu wird die Chipkarte 160 in das Lesegerät 158 geschoben und freigeschaltet. Die Freischaltung der Chipkarte 160 kann durch Eingabe einer Personal Identification Number (PIN) in das Lesegerät 100 bzw. das Chipkarten-Lesegerät 158 erfolgen, letzteres insbesondere dann, wenn es sich um ein sogenanntes Klasse 2 oder 3 Chipkarten-Lesegerät handelt. Ferner kann auch ein biometrisches Merkmal eines autorisierten Benutzers für die Freischaltung des Chipkarte verwendet werden. Hierzu kann das Chipkartenlesegerät beispielsweise einen Fingerabdrucksensor aufweisen.

Durch das kryptographische Anwendungsprogramm 156 wird für das Auslesen des Datenobjekts 104 die Ausführung des kryptographischen Protokolls gestartet. Hierzu startet das kryptographische Anwendungsprogramm 156 die Programminstruktionen 124' und überträgt ein Signal über die Schnittstelle 142' und die Kommunikationsverbindung 148 zu der Schnittselle 142 des Dokuments 101, so dass dort die entsprechenden Programminstruktionen 124 für die Durchführung des kryptographischen Protokolls gestartet werden.

Beispielsweise handelt es sich bei dem verwendeten kryptographischen Protokoll um einen Challenge-Response-Verfahren, das auf einem geheimen symmetrischen Schlüssel basiert. Dieser geheime symmetrische Schlüssel ist als Schlüssel 164 in der Chipkarte 160 gespeichert und derselbe Schlüssel ist auch für das Dokument 101 verfügbar, beispielsweise indem dieser geheime Schlüssel in einem geschützten Speicherbereich des Speichers 103 gespeichert ist.

Von den Programminstruktionen 124 wird beispielsweise eine Zufallszahl generiert. Der Prozessor 105 greift dann auf den Speicher 103 zu, um den symmetrischen geheimen Schlüssel aus dem Speicher 103 auszulesen. Mit Hilfe des symmetrischen geheimen Schlüssels wird die Zufallszahl durch die Programminstruktionen 124 verschlüsselt. Die verschlüsselte Zufallszahl wird sodann von der Schnittstelle 142 über die Kommunikationsverbindung 148 an die Schnittstelle 142' übertragen und von dem kryptographischen Anwendungsprogramm 156 empfangen.

Die Programminstruktionen 124' generieren dann ein Kommando 170, beispielsweise eine sogenannte Kommando-APDU, die das von dem Dokument 101 empfangene Chiffrat, das heißt die verschlüsselte Zufallszahl, beinhaltet, sowie die Anforderung zur Entschlüsselung des Chiffrats mit Hilfe des in der Chipkarte 160 gespeicherten Schlüssels 164. Das Kommando 170 wird von dem Chipkarten-Lesegerät 158 zu der Chipkarte 160 übertragen.

Aufgrund des Kommandos 170 wird die Ausführung der Programminstruktionen 168 durch den Prozessor 166 gestartet, so dass mit Hilfe des Schlüssels 164 das mit dem Kommando 170 empfangene Chiffrat entschlüsselt wird. Die Programminstruktionen 168 generieren daraufhin eine Antwort 172, beispielsweise eine sogenannte Antwort-APDU, die das Ergebnis der Entschlüsselung beinhaltet.

Die Antwort 172 wird von der Chipkarte 160 über das Chipkarten-Lesegerät 158 und die Schnittstelle 154 an das kryptographische Anwendungsprogramm 156 übertragen. Durch Ausführung der Programminstruktionen 124' wird das Ergebnis der Entschlüsselung aus der Antwort 172 ausgelesen und über die Schnittstelle 142', die Kommunikationsverbindung 148 und die Schnittstelle 142 an das Dokument 101 übertragen. Daraufhin wird durch Ausführung der Programminstruktionen 124 durch das Dokument 101 überprüft, ob das Ergebnis der Entschlüsselung mit der ursprünglich generierten Zufallszahl übereinstimmt. Wenn dies der Fall ist, muss der Schlüssel 164 mit dem symmetrischen geheimen Schlüssel des Dokuments 101, der in dem geschützten Speicherbereich des Speichers 103 gespeichert ist, übereinstimmen. In diesem Fall ist das kryptographische Protokoll erfolgreich durchgeführt worden, so dass ein externer Lesezugriff des Lesegeräts 100 auf das Datenobjekt 104 freigegeben wird.

Das Datenobjekt 104 wird dann von der Schnittstelle 142 über die Kommunikationsverbindung 148 zu der Schnittstelle 142' übertragen und von dem kryptographischen Anwendungsprogramm 156 in dem Speicher 150 gespeichert, so dass das Datenobjekt 104 auf einer Anzeige, beispielsweise einem LCD-Display des Lesegeräts 100 oder einem an das Lesegerät 100 angeschlossenen externen Display angezeigt werden kann und / oder mit weiteren Datenverarbeitungsschritten weiterverarbeitet werden kann.

Wenn es sich bei dem kryptographischen Protokoll beispielsweise um ein Challenge-Response-Verfahren basierend auf einem asymmetrischen Schlüsselpaar handelt, kann beispielsweise wie folgt vorgegangen werden:
In der Chipkarte 160 wird das Schlüsselpaar bestehend aus dem geheimen Schlüssel 164 und dem dazugehörigen öffentlichen Schlüssel abgespeichert. Die Speicherung des öffentlichen Schlüssels erfolgt in einem nicht-geschützten Speicherbereich der Chipkarte 160, der über das Chipkarten-Lesegerät 158 ausgelesen werden kann.

Zur Durchführung des kryptographischen Protokolls generieren die Programminstruktionen 124' zunächst eine Kommando-APDU zum Lesen des öffentlichen Schlüssels von der Chipkarte 160. Der öffentliche Schlüssel wird dann durch Ausführung der Programminstruktionen 124' von dem Lesegerät 100 zu dem Dokument 101 übertragen, und zwar über die Kommunikationsverbindung 148.

Die Programminstruktionen 124 erzeugen wiederum eine Zufallszahl, die mit Hilfe des öffentlichen Schlüssels verschlüsselt wird. Das daraus resultierende Chiffrat wird von dem Dokument 101 an das Lesegerät 100 über die Kommunikationsverbindung 148 übertragen. Daraufhin generieren die Programminstruktionen 124' ein Kommando 170 zur Entschlüsselung des von dem Dokument 101 empfangenen Chiffrats. Daraufhin wird das Chiffrat durch Ausführung der Programminstruktionen 168 von der Chipkarte 160 unter Verwendung des geheimen Schlüssels 164 entschlüsselt.

Durch die Programminstruktionen 168 wird eine Antwort 172 generiert, die das Ergebnis der Entschlüsselung beinhaltet. Dieses Ergebnis der Entschlüsselung wird durch Ausführung der Programminstruktionen 124' über die Kommunikationsverbindung 148 an das Dokument 101 übertragen, wo durch Ausführung der Programminstruktionen 124 das Ergebnis der Entschlüsselung mit der ursprünglich generierten Zufallszahl verglichen wird. Wenn beides übereinstimmt, war die Durchführung des kryptographischen Protokolls erfolgreich, so dass wiederum der externe Lesezugriff auf das Datenobjekt 104 durch das Dokument 101 freigegeben wird.

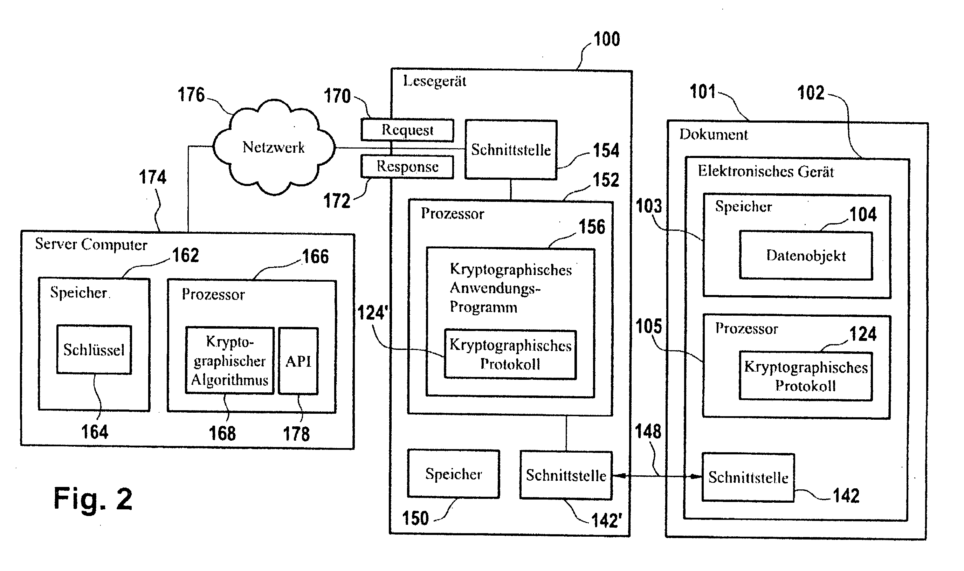

Die Figur 2 zeigt eine weitere Ausführungsform des Lesegeräts 100, wobei bei dieser Ausführungsform die Schnittstelle 154 als Netzwerk-Schnittstelle ausgebildet ist. Als kryptographische Komponente dient bei dieser Ausführungsform ein Server-Computer 174 mit dem das Lesegerät 100 über ein Netzwerk 176 kommunizieren kann. Der Server-Computer 174 kann sich beispielsweise in einem Trust-Center befinden. Die Programminstruktionen 168, die zur Ausführung eines kryptographischen Algorithmus auf einem Prozessor 166 des Server-Computers 174 dienen, können ein Application Programming Interface 178 aufweisen, welches von den Programminstruktionen 124' angesprochen werden kann.

Beispielsweise erfolgt die Kommunikation zwischen dem Lesegerät 100 und dem Server-Computer 174 über das Netzwerk 176 mit einem Request-Response Protokoll, wie zum Beispiel dem Hypertext Transfer Protocol (HTTP). Ferner kann auch das Secure Hypertext Transfer Protocol (HTTPS), eine VPN-Verbindung oder eine Kommunikation über einen anderen geschützten Netzwerk-Zugriff erfolgen.

Als Kommando 170 für die Anforderung der Durchführung des kryptographischen Algorithmus generieren die Programminstruktionen 124' bei dieser Ausführungsform also einen entsprechenden Request, den der Server-Computer 174 mit einer Antwort 172, das heißt einer "Response", beantwortet, die das Ergebnis der Durchführung des kryptographischen Algorithmus beinhaltet.

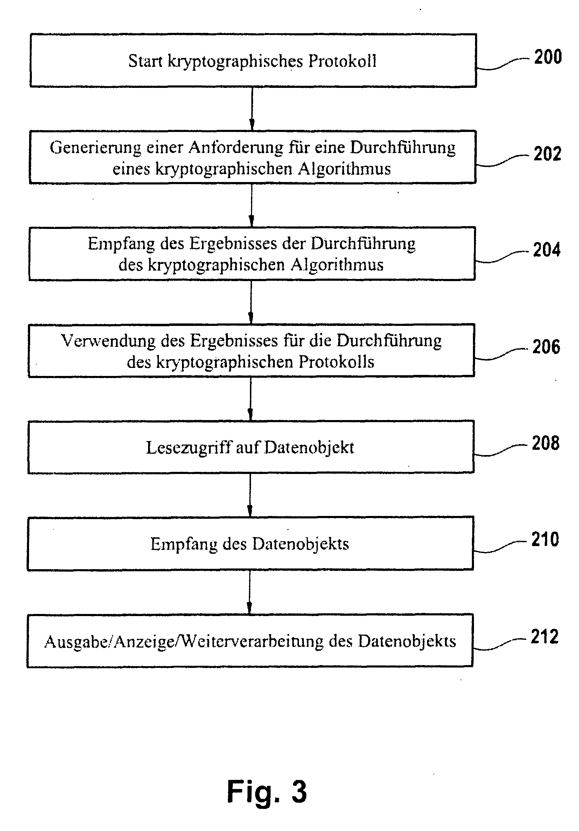

Die Figur 3 zeigt ein entsprechendes Flussdiagramm. In dem Schritt 200 wird eine Kommunikationsverbindung zwischen dem Lesegerät und dem Dokument aufgebaut. Beispielsweise sendet das Lesegerät über die Kommunikationsverbindung ein Signal, durch welches das kryptographische Protokoll gestartet wird (Schritt 200). In Abhängigkeit von dem verwendeten kryptographischen Protokoll erhält das Lesegerät daraufhin von dem Dokument Daten für die Durchführung des kryptographischen Protokolls, wie zum Beispiel eine verschlüsselte Zufallszahl zur Anwendung in einem Challenge-Response-Verfahren.

In dem Schritt 202 generiert das Lesegerät eine Anforderung für eine Durchführung eines kryptographischen Algorithmus, wie zum Beispiel zur Entschlüsselung der von dem Dokument erhaltenen Daten mit Hilfe eines geheimen Schlüssels. Diese Anforderung wird von dem Lesegerät an eine externe kryptographische Komponente übertragen, wie zum Beispiel eine Chipkarte (vgl. die Ausführungsform der Figur 1) oder einen Server-Computer (vgl. die Ausführungsform der Figur 2).

Nach Empfang der Anforderung führt die kryptographische Komponente den kryptographischen Algorithmus aus. Beispielsweise entschlüsselt die kryptographische Komponente die von dem Lesegerät mit der Anforderung empfangenen Daten, wobei der in der kryptographischen Komponente gespeicherte geheime Schlüssel verwendet wird. Die kryptographische Komponente generiert eine Antwort auf die Anforderung, welche das Ergebnis der Durchführung des kryptographischen Algorithmus beinhaltet. Diese Antwort mit dem Ergebnis empfängt das Lesegerät von der kryptographischen Komponente in dem Schritt 204.

In dem Schritt 206 verwendet das Lesegerät und / oder das Dokument das Ergebnis der Durchführung des kryptographischen Algorithmus, das in dem Schritt 204 empfangen worden ist, für die weitere Durchführung des kryptographischen Protokolls.

Bei Verwendung einer Zufallszahl für ein Challenge-Response-Verfahren überträgt beispielsweise das Lesegerät das Ergebnis der Entschlüsselung an das Dokument, welches daraufhin das Ergebnis der Entschlüsselung mit der ursprünglich generierten Zufallszahl vergleicht.

Nach erfolgreicher Durchführung des kryptographischen Protokolls erfolgt in dem Schritt 208 ein Lesezugriff auf das in dem geschützten Speicherbereich des Dokuments gespeicherte Datenobjekt und dessen Übertragung an das Lesegerät über die Kommunikationsverbindung. Dieser Lesezugriff kann unmittelbar von dem Lesegerät oder von dem Dokument selbst ausgeführt werden.

In dem Schritt 210 empfängt das Lesegerät dieses Datenobjekt. Je nach Anwendungsfall wird das Datenobjekt beispielsweise auf einer Anzeige des Lesegeräts, zum Beispiel einem LCD-Display oder einem Bildschirm, ausgegeben.

Wenn es sich bei dem Datenobjekt beispielsweise um ein Gesichtsbild handelt, so wird das Gesichtsbild auf einem Bildschirm angezeigt, so dass die Übereinstimmung des angezeigten Gesichtsbildes mit einem auf dem Dokument aufgedrucktem Passbild überprüft werden kann. Alternativ oder zusätzlich wird das Datenobjekt mit einem entsprechenden, in einer Datenbank abgespeicherten Referenzobjekt verglichen.

Wenn es sich bei dem Datenobjekt um Fingerabdruckdaten, Irisscan-Daten oder andere biometrische Daten handelt, so können diese für die Überprüfung der entsprechenden biometrischen Eigenschaften des Trägers des Dokuments herangezogen werden. Hierzu kann an das Lesegerät eine entsprechende Vorrichtung zur Erfassung der betreffenden biometrischen Daten angeschlossen sein, beispielsweise also ein Fingerabdruck- oder Irisscanner.

Die eingescannten biometrischen Daten des Trägers des Dokuments werden von dem Lesegerät mit den in dem Datenobjekt beinhalteten biometrischen Daten auf Übereinstimmung geprüft, um die Authentizität des Dokuments sicherzustellen.

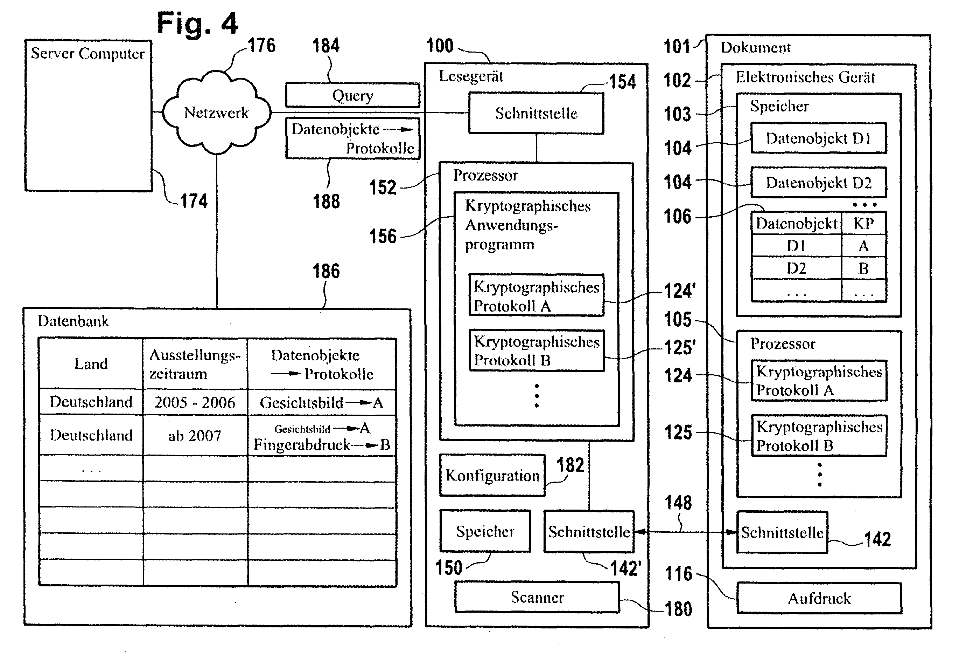

Die Figur 4 zeigt eine Ausführungsform des erfindungsgemäßen Lesegeräts 100 für Dokumente 101. Die Dokumente 101 können ein oder mehrere Datenobjekte 104 speichern. Falls in einem Dokument 101 mehrere Datenobjekte 104 gespeichert sind, kann jedem der Datenobjekte ein bestimmtes kryptographisches Protokoll zugeordnet sein. Die in einem gegebenen Dokument 101 gespeicherten Datenobjekte 104 und die diesen Datenobjekten zugeordneten kryptographischen Protokolle können zum Beispiel durch das Ausgabedatum und/oder einen anderen Ausgabeparameter, wie zum Beispiel das das Dokument ausstellende Land, die ausstellende Institution oder dergleichen bestimmt sein.

Im weiteren wird ohne Beschränkung der Allgemeinheit davon ausgegangen, dass die von dem Dokument 101 gespeicherten Datenobjekte durch das ausstellende Land und den Ausstellungszeitraum des Dokuments 101 gegeben sind. Die entsprechenden Informationen sind von dem Dokument 101 ungeschützt lesbar, beispielsweise durch optisches Lesen eines maschinenlesbaren Aufdrucks 116 des Dokuments 101. Bei dem Aufdruck 116 kann es sich beispielsweise um die sogenannte ICAO-Zeile eines elektronischen Reisepasses handeln. Das Lesegerät 100 hat einen optischen Scanner 180, um den Aufdruck 116 zu erfassen.

Ferner hat das Lesegerät 100 einen Konfigurationsspeicher 182, in dem Konfigurationsdaten gespeichert sein können, welche die Arbeitsweise des Lesegeräts 100 festlegen. Beispielsweise ist in dem Konfigurationsspeicher 182 definiert, dass das Lesegerät 100 nach Einlesen der Daten von dem Aufdruck 116 eine Datenbankabfrage 184 ("Query") erzeugt, die von der Schnittstelle 154 über das Netzwerk 176 zu einer externen Datenbank 186 übertragen wird.

Die Datenbank 186 spezifiziert für verschiedene Länder und Ausstellungszeiträume von Dokumenten 101 die in den jeweiligen Dokumenten 101 gespeicherten Datenobjekte und die diesen Datenobjekten zugeordneten kryptographischen Protokolle. Beispielsweise werden von der Bundesrepublik Deutschland in dem Ausstellungszeitraum 2005 bis 2006 Dokumente 101 ausgegeben, in denen im geschützten Speicherbereich des Speichers 103 ein Gesichtsbild ("Datenobjekt D1") gespeichert ist, welchem das kryptographische Protokoll (KP) A zugeordnet ist, wie zum Beispiel ein auf einem symmetrischen Schlüssel basierenden kryptographisches Protokoll.

Dagegen werden von der Bundesrepublik Deutschland ab 2007 Dokumente 101 ausgegeben, in denen zusätzlich in dem geschützten Speicherbereich Fingerabdruckdaten ("Datenobjekt D2") gespeichert sind, denen ein kryptographisches Protokoll B zugeordnet sind, wie zum Beispiel ein auf einem asymmetrischen Schlüssel basierendens kryptographisches Protokoll. Entsprechende weitere Eintragungen kann die Datenbank 186 für andere Länder und Ausstellungszeiträume beinhalten.

Aufgrund der Datenbankabfrage 184 generiert die Datenbank 186 eine Antwort 188, die die Datenobjekte und die den Datenobjekten zugeordneten Protokolle beinhaltet, die das betreffende Dokument 101 nach den in der Datenbankabfrage 184 beinhalteten Daten betreffend das Land und den Ausstellungszeitraum aufweisen soll.

Die entsprechende Zuordnung der in dem elektronischen Speicher 103 gespeicherten Datenobjekte 104 zu kryptographischen Protokollen ist in einer Zuordnungstabelle 106 in einem geschützten Speicherbereich des Speichers 103 gespeichert. Der Prozessor 105 ist dementsprechend neben der Ausführung der Programminstruktionen 124 zur Durchführung des kryptographischen Protokolls A zur Ausführung weiterer Programminstruktionen, wie zum Beispiel der Programminstruktionen 125 zur Durchführung des kryptographischen Protokolls B ausgebildet. Dementsprechend beinhaltet auch das kryptographische Anwendungsprogramm 156 weitere Programminstruktionen, wie zum Beispiel die Programminstruktionen 125' zur Durchführung des kryptographischen Protokolls B.

Das Dokument 101 lässt nur dann einen externen Lesezugriff auf ein bestimmtes Datenobjekt 104 zu, nachdem das für dieses Datenobjekt 104 in der Zuordnungstabelle 106 festgelegte kryptographische Protokoll erfolgreich durchgeführt worden ist. Beispielsweise setzt also ein externer Lesezugriff auf das Datenobjekt D1 voraus, dass das kryptographische Protokoll A erfolgreich durchgeführt worden ist, wohingegen für einen solchen externen Lesezugriff auf das Datenobjekt D2 die vorherige Durchführung eines kryptographischen Protokolls B einer höheren Sicherheitsstufe erforderlich ist.

Zum Auslesen der Datenobjekte 104 aus dem Speicher 103 durch das Lesegerät 100 wird wie folgt vorgegangen:
Zunächst wird mit Hilfe des Scanners 180 der Aufdruck 116 von dem Dokument 101 gelesen und die in dem Aufdruck 116 beinhalteten Daten erfasst. Mit Hilfe dieser Daten generiert der Prozessor 152 entsprechend der in dem Konfigurationsspeicher 182 gespeicherten Konfigurationsdaten die Datenbankabfrage 184. Nach Empfang der Antwort 188 von der Datenbank 186 führt das kryptographische Anwendungsprogramm 156 die in der Antwort 188 angegebenen kryptographischen Protokolle durch, um auf die entsprechenden Datenobjekte 104 zugreifen zu können. Zur Ausführung der kryptographischen Protokolle für das nachfolgende Auslesen der betreffenden Datenobjekte 104 wird im Prinzip so vorgegangen, wie oben mit Hilfe der Figuren 1 bis 3 erläutert.

Falls das Lesegerät 100 ohne einen Netzwerkzugriff betrieben wird, beispielsweise in der Ausführungsform der Figur 1, so kann es vorteilhaft sein, in dem Lesegerät 100, wie zum Beispiel dem Konfigurationsspeicher 182, zumindest einen Teil der Datenbank 186 lokal zu speichern. In diesem Fall richtet sich die Datenbankabfrage 184 an den Konfigurationsspeicher 182 statt an die externe Datenbank 186.

Ferner kann in dem Konfigurationsspeicher 182 auch angegeben sein, dass das Lesegerät zum Zugriff auf ein bestimmtes Datenobjekt mit einem Trial-and-Error Verfahren arbeitet, das heißt beispielsweise beginnend mit einem kryptographischen Protokoll einer geringen Sicherheitsstufe einen Lesezugriff versucht, und wenn dieses nicht gelingt, den Lesezugriff mit dem kryptographischen Protokoll der nächst höheren Sicherheitsstufe erneut zu versuchen, bis der Lesezugriff gelingt oder entgültig scheitert, um dann zum nächsten in Frage kommenden Datenobjekt überzugehen.

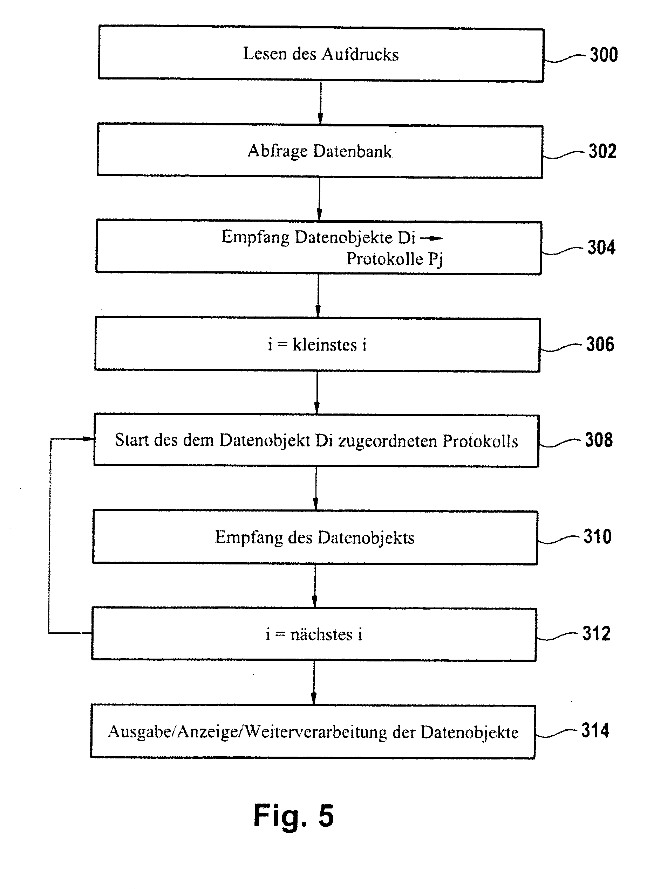

Die Figur 5 zeigt ein entsprechendes Flussdiagramm. In dem Schritt 300 liest das Lesegerät den Aufdruck des Dokuments beispielsweise mit Hilfe eines optischen Scanners. Durch das Lesen des Aufdrucks erhält das Lesegerät Daten, mit Hilfe derer es in dem Schritt 302 eine Datenbank abfragt. Als Ergebnis der Datenbankabfrage erhält das Lesegerät eine Liste der Datenobjekte Dᵢ, die in dem geschützten Speicher des Dokuments gespeichert sein sollen, und die den Datenobjekten Dᵢ jeweils zugeordneten kryptographischen Protokolle Pⱼ (Schritt 304).

In dem Schritt 306 wird der Index i initialisiert, wie zum Beispiel i = 1.

Daraufhin wird in dem Schritt 308 das kryptographische Protokoll Pⱼ (D1), das dem Datenobjekt D1 zugeordnet ist, gestartet. Nach erfolgreicher Durchführung des kryptographischen Protokolls Pⱼ (D1) wird das Datenobjekt von dem Lesegerät in dem Schritt 310 empfangen und der Index i wird in dem Schritt 312 inkrementiert, um zu dem nächsten Datenobjekt Dᵢ der in dem Schritt 304 empfangenen Liste überzugehen. Für das nächste Datenobjekt Dᵢ werden die Schritt 308 und 310 erneut durchgeführt, solange, bis sämtliche Datenobjekte Dᵢ der empfangenen Liste abgearbeitet sind.

In dem Schritt 314 werden die Datenobjekte je nach Anwendungsfall ausgegeben, angezeigt oder weiterverarbeitet.

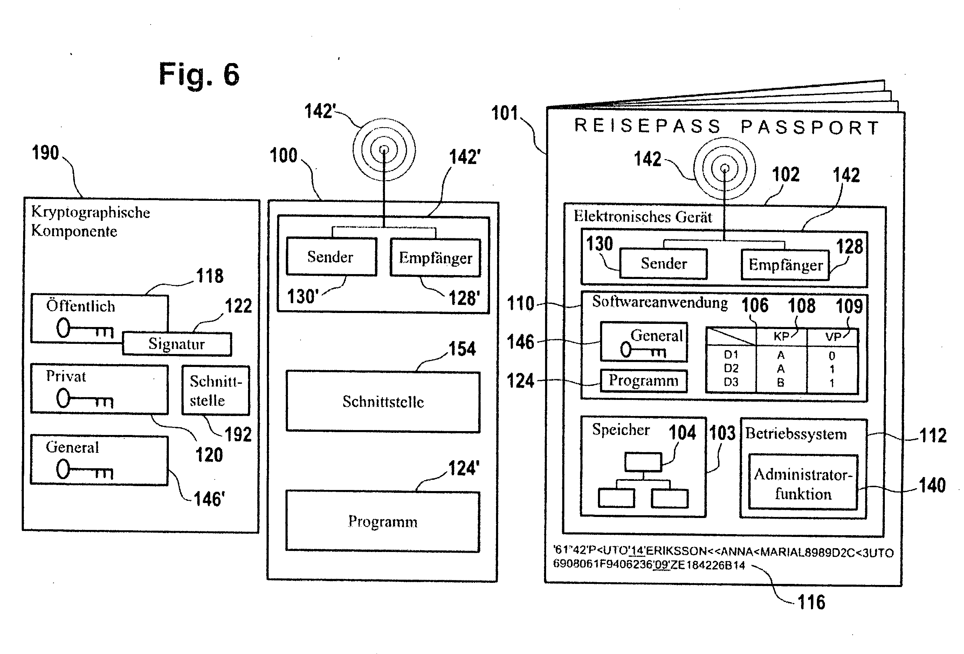

Die Figur 6 zeigt ein Blockdiagramm einer weiteren Ausführungsform des Lesegeräts 100 und des elektronischen Geräts 102, das in ein Ausweisdokument 101 integriert ist. Das Ausweisdokument 101 ist als Reisepass in schematischer, perspektivischer Ansicht dargestellt und weist eine Zone mit maschinenlesbaren gedruckten Daten als Aufdruck 116 auf. Die Integration des elektronischen Geräts 102 in das Ausweisdokument 101 kann beispielsweise durch Einbetten in den Einbanddeckel oder die Hauptseite eines Reisepasses erfolgen.

Sowohl das elektronische Gerät 102 als auch das Lesegerät 100 könne über eine kontaktlose Schnittstelle 142 bzw. 142' verfügen, die jeweils einen Sender 130 bzw. 130' und einen Empfänger 128 bzw. 128' aufweisen und die kontaktlose Kommunikation zwischen dem Lesegerät 100 und dem elektronischen Gerät 102 ermöglichen. Das elektronische Gerät 102 kann einen Speicher für eine Mehrzahl von Datenobjekten 104 aufweisen. In einem oder mehreren der Datenobjekte 104 können personenbezogene biometrische Daten, wie zum Beispiel ein Lichtbild, Fingerabdrücke oder Irisdaten des Inhabers des Ausweisdokuments 101 abgelegt sein.

Die Speicherung der Datenobjekte 104 in dem Speicher 103 kann der Standardserie 9303 "maschinenlesbare Reisedokumente" der Internationalen Luftfahrtbehörde ICAO folgen. Definiert durch die ICAO sind unter der Bezeichnung "logische Datenstruktur" (LDS), ein mit dem Chipkartenstandard ISO 7816-4 konformes Dateisystem sowie eine interoperable Struktur der in diesem Dateisystem gespeicherten Datenobjekte.

Das Lesegerät 100 kann mit computerausführbaren Programminstruktionen 124' programmiert sein, die es ihm erlauben, über die kontaktlosen Schnittstellen 142' und 142 auf die in dem Speicher 103 des elektronischen Geräts 102 gespeicherten Datenobjekte 104 lesend zuzugreifen. Zum Schutz insbesondere der personenbezogenen biometrischen Daten vor unberechtigtem Auslesen verfügt das elektronische Gerät 102 über die entsprechenden Programminstruktionen 124, die den lesenden Zugriff auf die Datenobjekte 104 an die erfolgreiche Durchführung eines kryptographischen Protokolls mit dem Lesegerät 100 binden können.

Inden verschiedenen Datenobjekten 104 können verschiedene Arten personenbezogener biometrischer Daten abgelegt sein, die unterschiedlich schutzwürdig sind. Zum Beispiel kann einem Lichtbild nur geringe Sensibilität zugemessen werden, Fingerabdrücken oder Irisdaten dagegen eine höhergradige Schutzwürdigkeit. Die unterschiedliche Bewertung der Schutzwürdigkeit unterschiedlicher Datenobjekte 104 wird durch die Zuordnungstabelle 106 des elektronischen Geräts 102 codiert. In der Zuordnungstabelle ist jeweils einem Datenobjekt 104 ein kryptographisches Protokoll A, B, ... unterschiedlicher Sicherheitsstufe zugeordnet. Die Zuordnungstabelle kann einem oder mehreren der Datenobjekte 104 einen freien Zugang ohne bindende Durchführung eines kryptographischen Protokolls zuordnen.

Im Betrieb empfängt das elektronische Gerät 102 von dem Lesegerät 100 über den Empfänger 128 und die kontaktlose Schnittstelle 142 eine Anforderung für eines der Datenobjekte 104. Das elektronische Gerät 102 bestimmt sodann anhand der Zuordnungstabelle 106 ein kryptographisches Protokoll 108, dessen erfolgreiche Durchführung als Bedingung für den lesenden Zugriff des Lesegeräts 100 auf das eine der Datenobjekte festgelegt ist. Das elektronische Gerät 102 und das Lesegerät 100 führen dieses kryptographische Protokoll durch, beispielsweise also das kryptographische Protokoll A oder B, und das elektronische Gerät 102 übermittelt im Falle des Erfolgs das eine der Datenobjekte an das Lesegerät 100.

Das elektronische Gerät 102 kann eine Softwareanwendung 110 aufweisen, die die Zuordnungstabelle 106 beinhaltet. Hierbei wird das kryptographische Protokoll 108 durch die Softwareanwendung bestimmt, das kryptographische Protokoll wird durch das Lesegerät 100 und die Softwareanwendung 110 durchgeführt, und das eine der Datenobjekte wird durch die Softwareanwendung 110 übermittelt. Die Softwareanwendung 110 beinhaltet also die Programminstruktionen 124, 125,... (vgl. Fig. 1 , 2 und 4) für die Durchführung der kryptographischen Protokolle A, B,...

Das elektronische Gerät 102 kann ein Betriebssystem 112 aufweisen, das im Zusammenwirken mit der Hardware des elektronischen Geräts eine unberechtigte Veränderung oder Entfernung der Softwareanwendung verhindert und den Zugriff auf die Datenobjekte 104 nur über die Softwareanwendung zulässt. Auf diese Weise ist es möglich, das elektronische Gerät 102 auf der Basis massenproduzierter, standardisierter Hardware zu implementieren, während gleichzeitig die Spezifikationen der verwendeten kryptographischen Protokolle und die in der Zuordnungstabelle 103 kodierte Zuordnung von Datenobjekten 104 zu kryptographischen Protokollen unterschiedlichen Anforderungen angepasst werden kann. Das elektronische Gerät 102 kann eine Java Card mit einer virtuellen Java-Maschine sein, auf der die Softwareanwendung 110 in Form eines Java-Applets installiert ist.

Das Betriebssystem 112 kann die Softwareanwendung 110 einschließlich der Zuordnungstabelle 103 vor unberechtigter Veränderung und Entfernung schützen, gleichzeitig aber über eine Administratorfunktion 140 verfügen, die nach einer Authentisierung als Administrator des elektronischen Geräts 102 eine Veränderung oder Entfernung der Softwareanwendung zulässt. Die Administratorfunktion ist besonders vorteilhaft, weil das elektronische Gerät veränderten Anforderungen angepasst werden kann, anstatt es durch ein neues elektronisches Gerät zu ersetzen. Veränderte Anforderungen können beispielsweise verbesserte kryptographische Protokolle 108 oder eine geänderte Einstufung der Schutzwürdigkeit unterschiedlicher Datenobjekte 104 betreffen.

In der Zuordnungstabelle 106 können unterschiedlichen Datenobjekten weiterhin unterschiedliche Verschlüsselungsprotokolle 109 zugeordnet sein, nach denen das elektronische Gerät 102 und die Lesegerät 100 ihre Kommunikation verschlüsseln können. Eine Verschlüsselung ist besonders vorteilhaft, da sie es erlaubt, eine Beobachtung der kontaktlosen Kommunikation zwischen elektronischem Gerät und Lesegerät durch Dritte zu verhindern. Ob eine Verschlüsselung erforderlich ist, und falls ja welche, kann in der Zuordnungstabelle 106 in Abhängigkeit von der Sensitivität des betreffenden Datenobjekts 104 festgelegt werden.

Das elektronische Gerät 102 und das Lesegerät 100 können über geeignete kryptographische Schlüssel 118, 120 und 146 verfügen, die bei der Durchführung unterschiedlicher kryptographischer Protokolle eingesetzt werden. Soweit das Lesegerät 100 betroffen ist, sind diese kryptographischen Schlüssel vorzugsweise in einer externen kryptographischen Komponente 190 gespeichert, die eine Schnittstelle 192 zur Kommunikation mit der entsprechenden Schnittstelle 154 des Lesegeräts 100 aufweist. Bei der externen kryptographischen Komponente 190 kann es sich z.B. um eine Chipkarte (vgl. Ausführungsform der Fig. 1) oder einen Server Computer (vgl. Ausführungsform der Fig. 2 und Fig. 4) handeln.

Das Lesegerät 100 kann einen weiteren gerätespezifischen Schlüssel des elektronischen Geräts 102 aus den maschinenlesbaren gedruckten Daten 116 ableiten. Hierzu kann das Lesegerät einen optischen Sensor (vgl. Scanner 180 der Ausführungsform der Fig. 4) aufweisen, um die gedruckten Daten 116 optisch zu lesen.

Aus den so erfassten Daten wird dann z.B. ein symmetrischer Schlüssel zur Kommunikation mit dem elektronischen Gerät 102 gewonnen. In einer Ausführungsform werden die Daten 116 als symmetrischer Schlüssel verwendet. Dieser symmetrische Schlüssel kann in ungeschützter oder geschützter Form in dem elektronischen Gerät 102 gespeichert werden. Alternativ ist das elektronische Gerät 102 so ausgebildet, dass es im Bedarfsfall aus den auch elektronisch in dem elektronischen Gerät 102 gespeicherten Daten 116 diesen symmetrischen Schlüssel generiert.

Zusätzlich kann ein Generalschlüssel 146 bzw. 146' eingesetzt werden, der sowohl dem elektronischen Gerät als auch dem Lesegerät 100 zugänglich ist. Weiterhin kann das Lesegerät durch Zugriff auf die kryptographische Komponente 190 über ein asymmetrisches Schlüsselpaar aus öffentlichem 118 und privatem 120 Schlüssel verfügen, wobei das Lesegerät 100 dem elektronischen Gerät 102 im Rahmen eines kryptographischen Protokolls seinen öffentlichen Schlüssel übermittelt. Der öffentliche Schlüssel kann mit einer digitalen Signatur 122 versehen sein, die es erlaubt, über eine Zertifikatskette die Authentizität des Schlüssels 118 zu verifizieren.

Der Generalschlüssel 146' kann beispielsweise von dem Lesegerät 100 verwendet werden, um aus den optisch erfassten Daten 116 den weiteren symmetrischen Schlüssel zu generieren. Beispielsweise werden hierzu der Generalschlüssel 146' und die Daten 116 aneinandergehängt.

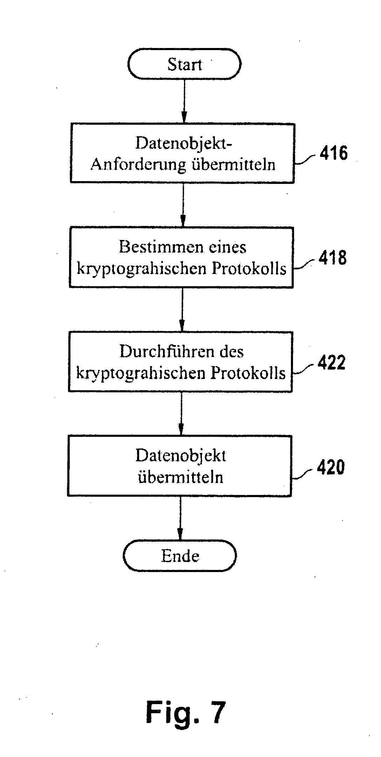

Figur 7 stellt in einem Flussdiagramm das erfindungsgemäße Verfahren zum Zugriff von dem Lesegerät auf eines der in dem elektronischen Gerät gespeicherten Datenobjekte dar. In Schritt 416 übermittelt das Lesegerät eine Anforderung für das eine der Datenobjekte an das elektronische Gerät. In Schritt 418 bestimmt das elektronische Gerät mit Hilfe seiner Zuordnungstabelle ein kryptographisches Protokoll. In Schritt 422 führen das elektronische Gerät und das Lesegerät das kryptographische Protokoll durch. In Schritt 420 übermittelt das elektronische Gerät das eine der Datenobjekte an das Lesegerät.

Hierbei kann die in der Zuordnungstabelle des elektronischen Geräts codierte Information, welches kryptographische Protokoll dem einen der Datenobjekte zugeordnet ist, dem Lesegerät bereits vor dem Senden in Schritt 216 der Anforderung bekannt sein. Beispielsweise kann die im elektronischen Gerät vorhandene Zuordnungstabelle einen durch einen Standard festgelegten Inhalt besitzen, von dem auch das Lesegerät über eine Kopie verfügt, die beispielsweise in dessen Konfigurationsspeicher (vgl. Konfigurationsspeicher 182 der Ausführungsform der Figur 4) gespeichert ist.

Alternativ kann das elektronische Gerät eine Spezifikation des kryptographischen Protokolls vor dessen Durchführung in dem Schritt 422 an das Lesegerät übermitteln, wobei die Spezifikation einem aus einem Repertoire mehrerer kryptographischer Protokolle, also beispielsweise der kryptographischen Protokolle A, B, ... , entsprechen muss, die das Lesegerät in der Lage ist, durchzuführen.

Als weitere Alternative kann das elektronische Gerät die Spezifikation mehrerer kryptographischer Protokolle an das Lesegerät übermitteln, unter denen das Lesegerät ein beliebiges kryptographisches Protokoll auswählen kann, dass es in der Lage ist durchzuführen und dessen erfolgreiche Durchführung zum Zugriff des externen Lesezugriffs auf das betreffende Datenobjekt führt.

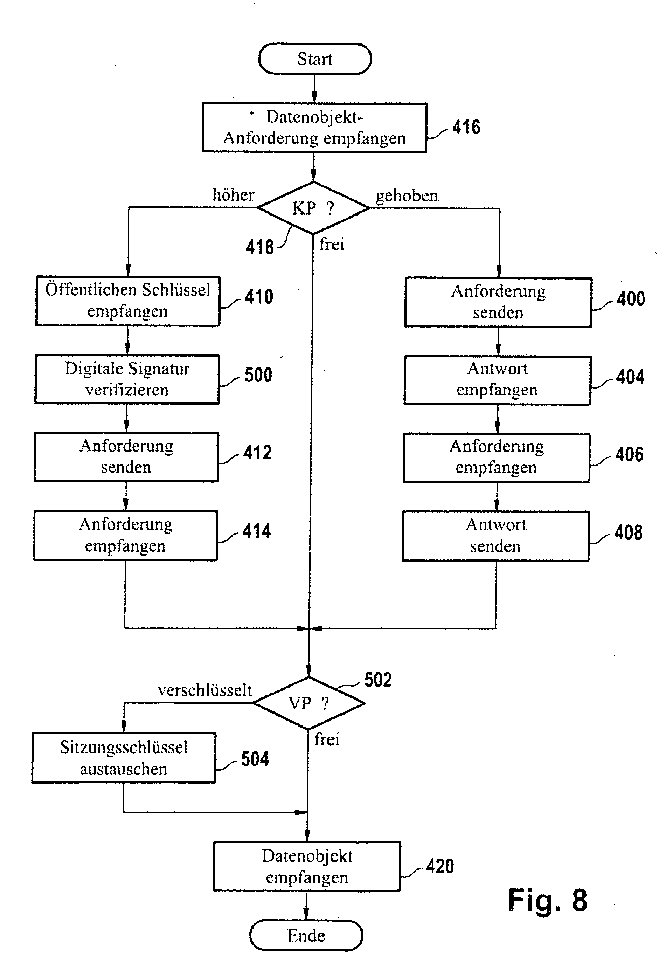

Die Figur 8 zeigt ein Flussdiagramm der von einer bevorzugten Ausführungsform des erfindungsgemäßen elektronischen Geräts implementierten Verfahrensschritte. Nachdem das elektronische Gerät in dem Schritt 416 von dem Lesegerät die Anforderung eines Datenobjekts empfangen hat, bestimmt es in Schritt 418 mit Hilfe der Zuordnungstabelle ein kryptographisches Protokoll, an dessen erfolgreiche Durchführung der lesende Zugriff durch das Lesegerät gebunden sein soll. Beispielhaft dargestellt sind als drei mögliche Zuordnungen die Bindung an ein kryptographisches Protokoll gehobener Sicherheitsstufe beginnend mit Schritt 400, die Bindung an ein kryptographisches Protokoll höherer Sicherheitsstufe beginnend mit Schritt 410, und ein freier Zugriff ohne Bindung an ein kryptographisches Protokoll.

Für den Fall einer Bestimmung des kryptographischen Protokolls gehobener Sicherheitsstufe für das Datenobjekt muss sich das Lesegerät gegenüber dem elektronischen Gerät in einem auf einem symmetrischen kryptographischen Algorithmus, wie dem 3DES- oder AES-Verschlüsselungsalgorithmus beruhenden Challenge-Response Verfahren authentisieren. Dazu sendet in Schritt 400 das elektronische Gerät eine Anforderung ("Challenge") an das Lesegerät, das die Anforderung korrekt beantworten und als Antwort ("Response") an das elektronische Gerät zurücksenden muss.

In dem Schritt 404 empfängt das elektronische Gerät die Antwort des Lesegeräts und überzeugt sich von ihrer Richtigkeit. Das elektronische Gerät kann in Schritt 406 in umgekehrter Weise eine Anforderung des Lesegeräts empfangen, die es in dem Schritt 408 beantwortet, um sich gegenüber dem Lesegerät zu authentisieren. Diese jeweils einseitige Authentisierung kann auch in Form einer gegenseitigen Authentisierung, das heißt einer sogenannten Mutual Authentication, in einem Schritt erfolgen.

Für den Fall einer Bestimmung des kryptographischen Protokolls höherer Sicherheitsstufe für das Datenobjekt muss sich das Lesegerät gegenüber dem elektronischen Gerät in einem auf einem asymmetrischen kryptographischen Algorithmus wie dem RSA- oder elliptische-Kurve-Kryptosystem beruhenden Challenge-Response-Verfahren authentisieren. Dazu empfängt das elektronische Gerät in Schritt 410 den öffentlichen Schlüssel des Lesegeräts. Dieser kann mit einer digitalen Signatur versehen sein, die das elektronische Gerät in dem Schritt 500 verifiziert.

Die Verifikation kann dabei auf einer Zertifikatskette basieren, an deren Ende eine oberste Zertifizierungsinstanz stehen muss, deren öffentlicher Schlüssel im elektronischen Gerät vorhanden ist. Im Fall einer Integration des elektronischen Geräts in ein Ausweisdokument kann es sich bei der obersten Zertifizierungsinstanz um die ausstellende nationale Behörde oder eine internationale Organisation handeln.

Im Schritt 412 sendet das elektronische Gerät eine Anforderung an das Lesegerät, die auf dem empfangenen öffentlichen Schlüssel beruht, und durch deren Beantwortung das Lesegerät beweisen muss, dass zu dem öffentlichen Schlüssel der dazugehörige private Schlüssel vorhanden ist. In dem Schritt 414 empfängt das elektronische Gerät die Antwort des Lesegeräts und überzeugt sich von deren Richtigkeit.

Das elektronische Gerät kann in dem Schritt 502 mit Hilfe der Zuordnungstabelle ein Verschlüsselungsprotokoll bestimmen, wonach das Lesegerät und das elektronische Gerät verschlüsselt miteinander kommunizieren. Beispielhaft dargestellt sind als mögliche Zuordnungen die Verschlüsselung der Kommunikation mit einem Sitzungsschlüssel, der in Schritt 504 ausgetauscht wird, und eine freie, unverschlüsselte Kommunikation, bei der der Schritt 504 umgangen wird. Dabei kommt in Schritt 504 beispielsweise ein Diffie-Hellmann-Schlüsselaustausch oder ein ähnliches Verfahren zum Einsatz, das dem elektronischen Gerät und dem Lesegerät erlaubt, auf sichere Weise einen Sitzungsschlüssel hoher Stärke abzuleiten.

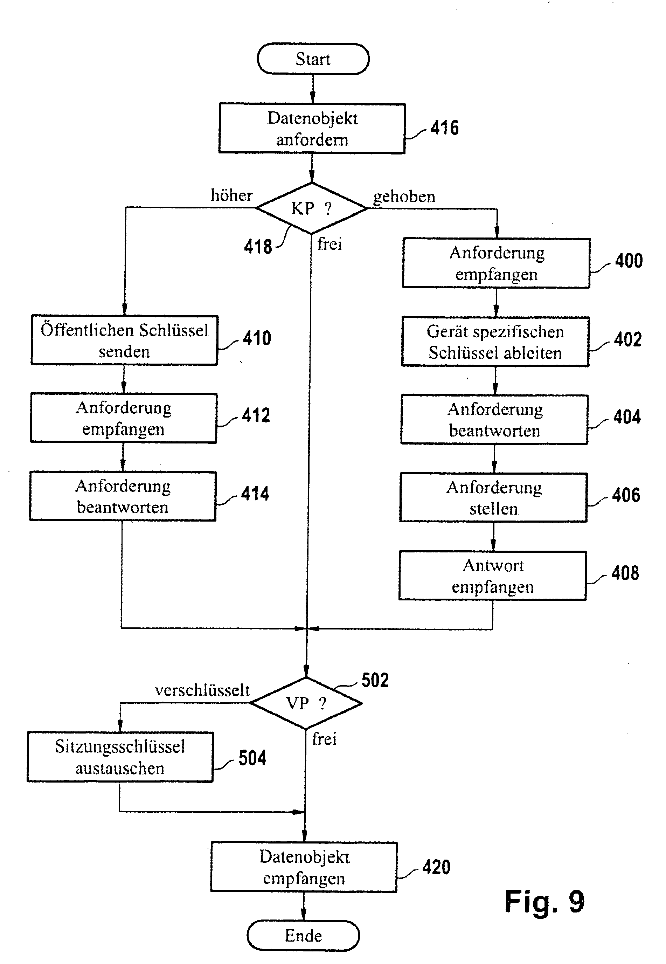

Die Figur 9 zeigt ein Flussdiagramm der von einer bevorzugten Ausführungsform des erfindungsgemäßen Lesegeräts implementierten Verfahrensschritte. Nachdem das Lesegerät in dem Schritt 416 ein Datenobjekt von dem elektronischen Gerät angefordert hat, folgt es an der Verzweigung 418 dem kryptographischen Protokoll, an dessen verpflichtende Durchführung das elektronische Gerät den lesenden Zugriff auf das Datenobjekt bindet. Analog zu der Figur 8 sind beispielhaft als drei mögliche Zuordnungen die Bindung an ein kryptographisches Protokoll gehobener Sicherheitsstufe beginnend mit Schritt 400, die Bindung an ein kryptographisches Protokoll höherer Sicherheitsstufe beginnend mit Schritt 410, und ein freier Zugriff ohne Bindung an ein kryptographisches Protokoll dargestellt.

Für den Fall einer Bestimmung des kryptographischen Protokolls gehobener Sicherheitsstufe für das Datenobjekt muss sich das Lesegerät gegenüber dem elektronischen Gerät in einem auf einem symmetrischen kryptographischen Algorithmus wie dem 3DES- oder AES-Verschlüsselungsalgorithmus beruhenden Challenge-Response-Verfahren authentisieren. Im Schritt 400 empfängt das Lesegerät eine Anforderung von dem elektronischen Gerät.

Bei dem symmetrischen kryptographischen Algorithmus kann der gerätespezifische Schlüssel zum Einsatz kommen, den das Lesegerät zur Beantwortung der Anforderung im Schritt 404 aus dem maschinenlesbaren gedruckten Daten, wie zum Beispiel dem Aufdruck 116 (vgl. Figur 4) ableiten muss. Dadurch beweist das Lesegerät, dass ihm beispielsweise ein Reisepass, in dem das elektronische Gerät integriert ist, sichtbar präsentiert wurde. Zusätzlich kann ein Generalschlüssel nötig sein, um den gerätespezifischen Schlüssel aus den maschinenlesbaren gedruckten Daten abzuleiten. In Schritt 404 sendet das Lesegerät die Antwort an das elektronische Gerät. In Schritt 406 kann in umgekehrter Weise das Lesegerät eine Anforderung an das elektronische Gerät senden und die Antwort in dem Schritt 408 empfangen.

Für den Fall einer Bestimmung des kryptographischen Protokolls höherer Sicherheitsstufe für das Datenobjekt muss sich das Lesegerät gegenüber dem elektronischen Gerät in einem auf einem asymmetrischen kryptographischen Algorithmus wie dem RSA oder elliptische-Kurven-Kryptosystem beruhenden Challenge-Response-Verfahren authentisieren. Dazu sendet das Lesegerät Schritt 410 seinen öffentlichen Schlüssel an das elektronische Gerät. In Schritt 412 empfängt das Lesegerät eine Anforderung von dem elektronischen Gerät, die auf dem gesendeten öffentlichen Schlüssel beruht, und durch deren Beantwortung im Schritt 414 das Lesegerät beweist, dass es auch über den zugehörigen privaten Schlüssel verfügt.

Beispielsweise generiert das elektronische Gerät eine Zufallszahl. Diese wird mit dem öffentlichen Schlüssel des Lesegeräts verschlüsselt und das daraus resultierende Chiffrat wird von dem elektronischen Gerät an das Lesegerät übertragen.

Das Lesegerät greift auf die kryptographische Komponente zu, um das Chiffrat mit dem zugehörigen geheimen Schlüssel zu entschlüsseln. Das Lesegerät sendet das Ergebnis der Entschlüsselung zurück an das elektronische Gerät. Das elektronische Gerät vergleicht daraufhin die ursprünglich generierte Zufallszahl mit dem von dem Lesegerät empfangenen Ergebnis der Entschlüsselung. Wenn beides übereinstimmt, wird das Lesegerät als authentisch und berechtigt eingestuft.

In einer anderen Ausführungsvariante des Authentisierungsprotokolls übertrag das Lesegerät zunächst seinen öffentlichen Schlüssel an das elektronische Gerät. Dies kann etwa in Form einer Zertifikatskette geschehen, wobei die Zertifikate vom elektronischen Gerät selbst überprüfbar sind. Anschließend fordert das Lesegerät vom elektronischen Gerät eine Zufallszahl an; diese wird vom Lesegerät digital signiert. Hierzu greift das Lesegerät auf die kryptographische Komponente zu, um das entsprechende Chiffrat unter Verwendung des geheimen Schlüssels zu erzeugen. Das Lesegerät sendet die digitale Signatur an das elektronische Gerät zurück und dieses überprüft die Gültigkeit der digitalen Signatur mittels des öffentlichen Schlüssels, der im vorherigen Schritt mittels einer Zertifikatskette eingebracht wurde.

Gelingt die Verifikation der Signatur, und ist zudem die signierte Zufallszahl diejenige, die das elektronische Gerät an das Lesegerät geschickt ist, so akzeptiert die elektronische Gerät die Authentizität des Lesegeräts.

Das elektronische Gerät kann die Übermittlung des Datenobjekts an die verpflichtende Durchführung der Schritte des kryptographischen Protokolls höherer Sicherheitsstufe zusätzlich zu den Schritten des Protokolls gehobener Sicherheitsstufe binden.

Ferner kann das elektronische Gerät in dem Schritt 502 mit Hilfe der Zuordnungstabelle ein Verschlüsselungsprotokoll bestimmen, gemäß dem das Lesegerät und das elektronische Gerät verschlüsselt miteinander kommunizieren. Beispielhaft dargestellt sind als mögliche Zuordnungen die Verschlüsselung der Kommunikation mit einem Sitzungsschlüssel, der in Schritt 504 ausgetauscht wird, und eine freie, unverschlüsselte Kommunikation, bei der der Schritt 504 umgangen wird.

### Bezugszeichenliste

- 100: Lesegerät
- 101: Dokument
- 102: elektronisches Gerät
- 103: Speicher
- 104: Datenobjekt
- 105: Prozessor
- 106: Zuordnungstabelle
- 108: kryptographisches Protokoll
- 109: Verschlüsselungsprotokoll
- 110: Softwareanwendung
- 112: Betriebssystem
- 116: Aufdruck
- 118: öffentlicher Schlüssel
- 120: privater Schlüssel
- 122: digitale Signatur
- 124, 124': Programminstruktionen
- 125, 125': Programminstruktionen
- 128, 128': Empfänger
- 130, 130': Sender
- 140: Administratorfunktion
- 142, 142': Schnittstelle
- 146, 146': Generalschlüssel
- 148: Kommunikationsverbindung
- 150: Speicher
- 152: Prozessor
- 154: Schnittstelle
- 156: kryptographisches Anwendungsprogramm
- 158: Chipkarten-Lesegerät
- 160: Chipkarte
- 162: Speicher
- 164: Schlüssel
- 166: Prozessor
- 168: Programminstruktionen
- 170: Kommando
- 172: Antwort
- 174: Server-Computer
- 176: Netzwerk
- 178: Application Programming Interface (API)
- 180: Scanner
- 182: Konfigurationsspeicher
- 184: Datenbankabfrage
- 186: Datenbank
- 188: Antwort
- 190: kryptographische Komponente
- 192: Schnittstelle

## Patentansprüche

1. Lesegerät (100) für ein Dokument (101) mit einem Datenspeicher (103) zur Speicherung zumindest eines ersten Datenobjekts (104; D1) und eines zweiten Datenobjekts (104; D2), wobei dem ersten Datenobjekt ein erstes kryptographisches Protokoll (A) und dem zweiten Datenobjekt ein zweites kryptographisches Protokoll (B) zugeordnet ist, wobei ein externer Lesezugriff auf das erste Datenobjekt die Durchführung des ersten kryptographischen Protokolls voraussetzt, wobei ein externer Lesezugriff auf das zweite Datenobjekt die Durchführung des zweiten kryptographischen Protokolls voraussetzt mit:
- einer ersten Schnittstelle (142') für den externen Lesezugriff vom dem Lesegerät auf das erste oder zweite Datenobjekt,
- Mitteln (124') zur Durchführung des ersten und des zweiten kryptographischen Protokolls,
- einer zweiten Schnittstelle (154) zur Anforderung (170) der Durchführung eines kryptographischen Algorithmus (168) von einer kryptographischen Komponente (160; 174; 190) und zum Empfang (172) eines Ergebnisses der Durchführung des kryptographischen Algorithmus von der kryptographischen Komponente,
wobei die Mittel zur Durchführung des kryptographischen Protokolls zur Generierung der Anforderung und zur Verwendung des Ergebnisses für die Durchführung des ersten und des zweiten kryptographischen Protokolls ausgebildet sind.

2. Lesegerät nach Anspruch 1, wobei es sich um ein Wert- oder Sicherheitsdokument, insbesondere ein Ausweisdokument, einen Führerschein, einen Berechtigungsnachweis oder dergleichen handelt.

3. Lesegerät nach einem der vorhergehenden Ansprüche mit einem optischen Sensor (180) zur Erfassung von optisch lesbaren Daten (116) des Dokuments, wobei die Mittel zur Durchführung des ersten und zweiten kryptographischen Protokolls für die Verwendung der Daten für die Durchführung des kryptographischen Protokolls ausgebildet sind.

4. Lesegerät nach einem der vorhergehenden Ansprüche, wobei die Mittel zur Durchführung des ersten und zweiten kryptographischen Protokolls zur Durchführung von zumindest ersten und zweiten kryptographischen Protokollen (A, B, ....) ausgebildet sind, wobei das zweite kryptographische Protokoll eine höhere Sicherheitsstufe als das erste kryptographische Protokoll hat.

5. Lesegerät nach Anspruch 4, wobei die Mittel zur Durchführung des ersten und zweiten kryptographischen Protokolls so ausgebildet sind, dass für den Zugriff auf das Datenobjekt zunächst das erste kryptographische Protokoll durchgeführt wird, und dass wenn die Durchführung des ersten kryptographischen Protokolls nicht zur Freigabe des externen Lesezugriffs durch das Dokument führt, nachfolgend das zweite kryptographische Protokoll der höheren Sicherheitsstufe durchgeführt wird.

6. Lesegerät nach einem der vorhergehenden Ansprüche, mit Mitteln (154) für einen Datenbankzugriff (184, 188), wobei in der Datenbank (186) die Zuordnung von kryptographischen Protokollen zu Datenobjekten gespeichert ist.

7. Lesegerät nach Anspruch 6, wobei die Mittel für den Datenbankzugriff so ausgebildet sind, dass die Abfrage der Datenbank mit einem von dem Dokument ausgelesenem Schlüssel (116) erfolgt, um die Zuordnung von kryptographischen Protokollen zu Datenobjekten dieses Dokuments zu bestimmen.

8. Lesegerät nach einem der vorhergehenden Ansprüche, mit einem Scanner (180) zum Lesen der in einem Aufdruck (116) des Dokuments beinhalteten Daten, mit einem Konfigurationsspeicher (182), in dem Konfigurationsdaten gespeichert sind, welche festlegen, dass das Lesegerät nach Einlesen der Daten eine Datenbankabfrage erzeugt, die an eine externe Datenbank (186) übertragen wird, wobei die externe Datenbank auf die Datenbankabfrage mit einer Antwort (188) antwortet, die die ersten und zweiten kryptographischen Protokolle angibt, um auf die entsprechenden ersten und zweiten Datenobjekte zugreifen zu können.

9. Lesegerät einem der vorhergehenden Ansprüche, wobei das zweite kryptographische Protokoll eine höhere Sicherheitsstufe als das erste kryptographische Protokoll hat, und mit einem Konfigurationsspeicher (182), in dem angegeben ist, dass das Lesegerät beginnend mit dem ersten kryptographischen Protokoll einen Lesezugriff auf eines der zumindest ersten und zweiten Datenobjekte versucht, und wenn dies nicht gelingt, den Lesezugriff mit dem kryptographischen Protokoll der nächst höheren Sicherheitsstufe zu versuchen, bis der Lesezugriff gelingt oder endgültig scheitert, um dann zum nächsten der zumindest ersten und zweiten Datenobjekte überzugehen.

10. Verfahren für einen externen Lesezugriff von einem Lesegerät (100) auf ein Datenobjekt, wobei es sich bei dem Datenobjekt um ein erstes Datenobjekts (104; D1) oder ein zweites Datenobjekts (104; D2) handelt, wobei zumindest das erste Datenobjekt (104; D1) und das zweite Datenobjekt (104; D2) in einem Datenspeicher (103) eines Dokuments (101) gespeichert sind, wobei dem ersten Datenobjekt (104; D1) ein erstes kryptographisches Protokoll (108; A) und dem zweiten Datenobjekt (104; D2) ein zweites kryptographisches Protokoll (108; B) zugeordnet sind, wobei das zweite kryptographische Protokoll eine höhere Sicherheitsstufe als das erste kryptographische Protokoll hat, mit folgenden Schritten:
- Durchführung eines dem Datenobjekt zugeordneten ersten oder zweiten kryptographischen Protokolls (108; A, B, ...) zur Freigabe eines externen Lesezugriffs durch das Dokument, wobei für die Durchführung des externen Lesezugriffs auf das erste Datenobjekt das erste kryptographische Protokoll durchgeführt wird, und wobei für den externen Lesezugriff auf das zweite Datenobjekt das zweite kryptographische Protokoll ausgeführt wird,
- Auslesen des Datenobjekts aus dem Datenspeicher nach der Freigabe des Zugriffs,
wobei für die Durchführung des dem jeweiligen ersten oder zweiten Datenobjekt zugeordneten kryptographischen Protokolls eine Anforderung (170) für die Ausführung eines kryptographischen Algorithmus (168) von dem Lesegerät (100) generiert und an eine kryptographische Komponente (160;174; 190) gesendet wird, und wobei das Lesegerät ein Ergebnis (172) der Durchführung des kryptographischen Algorithmus von der kryptographischen Komponente empfängt und für die Durchführung des dem Datenobjekt zugeordneten kryptographischen Protokolls verwendet.

11. Verfahren nach Anspruch 10, wobei es sich bei der kryptographischen Komponente um eine Chipkarte (160) oder einen Server-Computer (174) handelt.

12. Verfahren nach Anspruch 10 oder 11, wobei für den externen Lesezugriff auf eines der Datenobjekte zunächst das erste kryptographisches Protokoll einer geringeren Sicherheitsstufe durchgeführt wird, und wenn daraufhin keine Freigabe des externen Lesezugriffs durch das Dokument erfolgt, nachfolgend das zweite kryptographische Protokoll einer höheren Sicherheitsstufe, das vorzugsweise auf dem kryptographischen Protokoll der geringeren Sicherheitsstufe aufbaut, durchgeführt wird.

13. Verfahren nach einem der vorhergehenden Ansprüche 10, 11 oder 12, mit folgenden weiteren Schritten:
- Lesen von ungeschützten Daten (116) aus dem Dokument,
- Verwendung der Daten für eine Datenbankabfrage (184, 188), um die in dem Datenspeicher des Dokuments gespeicherten ersten und zweiten Datenobjekte und die den Datenobjekten zugeordneten kryptographischen Protokolle zu ermitteln,
- Durchführung der externen Lesezugriffe auf die Datenobjekte, wobei zuvor jeweils das dem betreffenden Datenobjekt zugeordnete kryptographische Protokoll durchgeführt wird.

14. Verfahren nach einem der Ansprüche 10 bis 13, mit folgenden weiteren Schritten:
- Optischen Lesen von Daten von dem Dokument,
- Erzeugung einer Datenbankabfrage nach dem Lesen der Daten,
- Übertragung der Datenbankabfrage an eine externe Datenbank (186),
- Empfang einer Antwort (188) von der externen Datenbank, die die ersten und zweiten kryptographischen Protokolle angibt, um auf die entsprechenden ersten und zweiten Datenobjekte zugreifen zu können.

15. Computerprogrammprodukt mit ausführbaren Instruktionen (124'; 125'; 156) zur Durchführung aller Schritte des Verfahrens nach einem der vorhergehenden Ansprüche 10 bis 14.

## Claims

1. Reader (100) for a document (101) having a data memory (103) for storing at least a first data object (104; D1) and a second data object (104; D2), a first cryptographic protocol (A) being assigned to the first data object and a second cryptographic protocol (B) being assigned to the second data object, external read access to the first data object presupposing the implementation of the first cryptographic protocol, external read access to the second data object presupposing the implementation of the second cryptographic protocol, having:
- a first interface (142') for the external read access to the first or second data object by the reader,
- means (124') for implementing the first and second cryptographic protocols,
- a second interface (154) for requesting (170) the execution of a cryptographic algorithm (168) by a cryptographic component (160; 174; 190) and for receiving (172) a result of the execution of the cryptographic algorithm by the cryptographic component,
the means for implementing the cryptographic protocol being designed to generate the request and to use the result to implement the first and second cryptographic protocols.

2. Reader according to Claim 1, the document being a valuable or security document, in particular an identity document, a driving licence, an authorization permit or the like.

3. Reader according to one of the preceding claims, having an optical sensor (180) for detecting optically readable data (116) of the document, the means for implementing the first and second cryptographic protocols being designed to use the data to implement the cryptographic protocol.

4. Reader according to one of the preceding claims, the means for implementing the first and second cryptographic protocols being designed to implement at least first and second cryptographic protocols (A, B, ...), the second cryptographic protocol having a higher security level than the first cryptographic protocol.

5. Reader according to Claim 4, the means for implementing the first and second cryptographic protocols being designed in such a manner that the first cryptographic protocol is first of all implemented for the access to the data object, and, if the implementation of the first cryptographic protocol does not result in the external read access being enabled by the document, the second cryptographic protocol with the higher security level is then implemented.

6. Reader according to one of the preceding claims, having means (154) for accessing a database (184, 188), the database (186) storing the assignment of cryptographic protocols to data objects.

7. Reader according to Claim 6, the means for accessing the database being designed in such a manner that the database is queried using a key (116) read from the document in order to determine the assignment of cryptographic protocols to data objects of this document.

8. Reader according to one of the preceding claims, having a scanner (180) for reading the data contained in an imprint (116) of the document, having a configuration memory (182) which stores configuration data which determine that the reader generates a database query after reading in the data, which query is transmitted to an external database (186), the external database responding to the database query with a response (188) which specifies the first and second cryptographic protocols in order to be able to access the corresponding first and second data objects.

9. Reader according to one of the preceding claims, the second cryptographic protocol having a higher security level than the first cryptographic protocol, and having a configuration memory (182) which specifies that the reader, starting with the first cryptographic protocol, attempts read access to one of the at least first and second data objects, and, if this is not successful, attempts the read access using the cryptographic protocol with the next higher security level until the read access is successful or definitively fails in order to then pass to the next data object of the at least first and second data objects.

10. Method for external read access to a data object by a reader (100), the data object being a first
data object (104; D1) or a second data object (104; D2), at least the first data object (104; D1) and the second data object (104; D2) being stored in a data memory (103) of a document (101), a first cryptographic protocol (108; A) being assigned to the first data object (104; D1) and a second cryptographic protocol (108; B) being assigned to the second data object (104; D2), the second cryptographic protocol having a higher security level than the first cryptographic protocol, having the following steps of:
- implementing a first or second cryptographic protocol (108; A, B, ...) assigned to the data object for the purpose of external read access being enabled by the document, the first cryptographic protocol being implemented in order to carry out the external read access to the first data object, and the second cryptographic protocol being implemented for the external read access to the second data object,
- reading the data object from the data memory after the access has been enabled,
a request (170) to execute a cryptographic algorithm (168) being generated by the reader (100) in order to implement the cryptographic protocol assigned to the respective first or second data object and being transmitted to a cryptographic component (160; 174; 190), and the reader receiving a result (172) of the execution of the cryptographic algorithm by the cryptographic component and using said result to implement the cryptographic protocol assigned to the data object.

11. Method according to Claim 10, the cryptographic component being a chip card (160) or a server computer (174).

12. Method according to Claim 10 or 11, the first cryptographic protocol with a lower security level first of all being implemented for the external read access to one of the data objects, and, if the external read access is then not enabled by the document, the second cryptographic protocol with a higher security level, which is preferably based on the cryptographic protocol with the lower security level, then being implemented.

13. Method according to one of the preceding Claims 10, 11 and 12, having the following further steps of:
- reading unprotected data (116) from the document,
- using the data for a database query (184, 188) in order to determine the first and second data objects stored in the data memory of the document and the cryptographic protocols assigned to the data objects,
- carrying out the external read accesses to the data objects, the cryptographic protocol assigned to the data object in question respectively being implemented beforehand.

14. Method according to one of Claims 10 to 13, having the following further steps of:
- optically reading data from the document,
- generating a database query after reading the data,
- transmitting the database query to an external database (186),
- receiving a response (188) from the external database, which response specifies the first and second cryptographic protocols in order to be able to access the corresponding first and second data objects.

15. Computer program product having executable instructions (124'; 125'; 156) for carrying out all of the steps of the method according to one of the preceding Claims 10 to 14.

## Revendications

1. Lecteur (100) pour un document (101) comprenant une mémoire de données (103) pour mémoriser au moins un premier objet de données (104 ; D1) et un deuxième objet de données (104 ; D2), un premier protocole cryptographique (A) étant associé au premier objet de données et un deuxième protocole cryptographique (B) au deuxième objet de données, un accès en lecture externe au premier objet de données supposant l'exécution du premier protocole cryptographique, un accès en lecture externe au deuxième objet de données supposant l'exécution du deuxième protocole cryptographique, comprenant :
- une première interface (142') pour l'accès en lecture externe par le lecteur au premier ou au deuxième objet de données,
- des moyens (124') pour exécuter le premier et le deuxième protocole cryptographique,
- une deuxième interface (154) pour demander (170) l'exécution d'un algorithme cryptographique (168) par un composant cryptographique (160 ; 174 ; 190) et pour recevoir (172) un résultat de l'exécution de l'algorithme cryptographique par le composant cryptographique,
les moyens pour exécuter le protocole cryptographique étant configurés pour générer la demande et pour utiliser le résultat de l'exécution du premier et du deuxième protocole cryptographique.

2. Lecteur selon la revendication 1, le document étant un document de valeur ou de sécurité, notamment une pièce d'identité, un permis de conduire, un justificatif d'autorisation ou similaire.

3. Lecteur selon l'une des revendications précédentes, comprenant un capteur optique (180) pour acquérir des données (116) à lecture optique du document, les moyens pour exécuter le premier et le deuxième protocole cryptographique étant configurés pour utiliser les données pour l'exécution du protocole cryptographique.

4. Lecteur selon l'une des revendications précédentes, les moyens pour exécuter le premier et le deuxième protocole cryptographique étant configurés pour exécuter au moins des premiers et des deuxièmes protocoles cryptographiques (A, B, ...), le deuxième protocole cryptographique possédant un niveau de sécurité supérieur à celui du premier protocole cryptographique.

5. Lecteur selon la revendication 4, les moyens pour exécuter le premier et le deuxième protocole cryptographique étant configurés de telle sorte que le premier protocole cryptographique est exécuté en premier pour l'accès à l'objet de données et que lorsque l'exécution du premier protocole cryptographique ne donne pas lieu à la libération de l'accès en lecture externe du document, le deuxième protocole cryptographique au niveau de sécurité plus élevé est ensuite exécuté.

6. Lecteur selon l'une des revendications précédentes, comprenant des moyens (154) pour un accès à une base de données (184, 188), l'association des protocoles cryptographiques aux objets de données étant mémorisée dans la base de données (186).

7. Lecteur selon la revendication 6, les moyens pour l'accès à une base de données étant configurés de telle sorte que l'interrogation de la base de données s'effectue avec une clé (116) lue par le document afin de déterminer l'association des protocoles cryptographiques aux objets de données de ce document.

8. Lecteur selon l'une des revendications précédentes, comprenant un scanner (180) pour lire les données contenues dans une surimpression (116) du document, comprenant une mémoire de configuration (182) dans laquelle sont enregistrées des données de configuration qui définissent que le lecteur, après avoir lu les données, génère une interrogation de base de données qui est transmise à une base de données externe (186), la base de données externe répondant à l'interrogation de la base de données par une réponse (188) qui indique le premier et le deuxième protocoles cryptographiques afin de pouvoir accéder aux premier et deuxième objets de données correspondants.

9. Lecteur selon l'une des revendications précédentes, le deuxième protocole cryptographique possédant un niveau de sécurité supérieur à celui du premier protocole cryptographique, et comprenant une mémoire de configuration (182) dans laquelle il est indiqué que le lecteur, en commençant avec le premier protocole cryptographique, tente un accès en lecture à au moins l'un des premier et deuxième objets de données, et si celui-ci n'aboutit pas, tente l'accès en lecture avec le protocole cryptographique ayant le niveau de sécurité immédiatement supérieur jusqu'à ce que l'accès en lecture aboutisse ou échoue définitivement pour ensuite passer au prochain de l'au moins un des premier et deuxième objets de données.

10. Procédé pour un accès en lecture externe par un lecteur (100) à un objet de données, l'objet de données étant un premier objet de données (104 ; D1) ou un deuxième objet de données (104 ; D2), au moins le premier objet de données (104 ; D1) et le deuxième objet de données (104 ; D2) étant mémorisés dans une mémoire de données (103) d'un document (101), un premier protocole cryptographique (108 ; A) étant associé au premier objet de données (104 ; D1) et un deuxième protocole cryptographique (108 ; B) au deuxième objet de données (104 ; D2), le deuxième protocole cryptographique possédant un niveau de sécurité supérieur à celui du premier protocole cryptographique, comprenant les étapes suivantes :
- Exécution d'un premier ou d'un deuxième protocole cryptographique (108 ; A, B, ...) associé à l'objet de données pour libérer un accès en lecture externe par le document, le premier protocole cryptographique étant exécuté pour l'exécution de l'accès en lecture externe au premier objet de données et le deuxième protocole cryptographique étant exécuté pour l'exécution de l'accès en lecture externe au deuxième objet de données,
- Lecture de l'objet de données depuis la mémoire de données après la libération de l'accès,
une demande (170) d'exécution d'un algorithme cryptographique (168) par le lecteur (100) étant générée pour l'exécution du protocole cryptographique associé respectivement au premier ou au deuxième et étant envoyée à un composant cryptographique (160 ; 174 ; 190), et le lecteur recevant un résultat (172) de l'exécution de l'algorithme cryptographique par le composant cryptographique et l'utilisant pour exécuter le protocole cryptographique associé à l'objet de données.

11. Procédé selon la revendication 10, le composant cryptographique étant une carte à puce (160) ou un ordinateur serveur (174).

12. Procédé selon la revendication 10 ou 11, le premier protocole cryptographique au niveau de sécurité plus faible étant exécuté en premier pour l'accès en lecture externe à l'un des objets de données et, s'il n'en résulte pas la libération de l'accès en lecture externe par le document, le deuxième protocole cryptographique au niveau de sécurité plus élevé, lequel se base de préférence sur le protocole cryptographique au niveau de sécurité plus faible, est ensuite exécuté.

13. Procédé selon l'une des revendications précédentes 10, 11 ou 12, comprenant les étapes supplémentaires suivantes :
- Lecture de données non protégées (116) du document,
- Utilisation des données pour l'interrogation d'une base de données (184, 188) afin de déterminer les premier et deuxième objets de données mémorisés dans la mémoire de données du document ainsi que les protocoles cryptographiques associés,
- Exécution du premier accès en lecture externe aux objets de données, le protocole cryptographique associé à l'objet de données concerné étant à chaque fois exécuté préalablement.

14. Procédé selon l'une des revendications 10 à 13, comprenant les étapes supplémentaires suivantes :
- Lecture optique de données depuis le document,
- Génération d'une interrogation de la base de données après la lecture des données,
- Transmission de l'interrogation de la base de données à une base de données externe (186),
- Réception d'une réponse (188) de la part de la base de données externe, laquelle indique le premier et le deuxième protocole cryptographique afin de pouvoir accéder aux premier et deuxième objets de données.

15. Programme informatique comprenant des instructions exécutables (124' ; 125' ; 156) pour exécuter toutes les étapes du procédé selon l'une des revendications précédentes 10 à 14.
